(19) **Europäisches Patentamt / European Patent Office / Office européen des brevets**

(11) **EP 4 692 846 A1**

(12) **EUROPEAN PATENT APPLICATION**
published in accordance with Art. 153(4) EPC

(43) Date of publication:
**11.02.2026 Bulletin 2026/07**

(21) Application number: **24780571.6**

(22) Date of filing: **27.03.2024**

(51) International Patent Classification (IPC):
**G01S 11/08** (2006.01)   **B60L 5/00** (2006.01)
**B60L 53/12** (2019.01)   **B60L 53/51** (2019.01)
**B60L 53/52** (2019.01)   **B60L 53/53** (2019.01)
**B60L 53/65** (2019.01)   **B60L 53/66** (2019.01)
**B60M 7/00** (2006.01)   **G01S 5/14** (2006.01)
**G01S 13/74** (2006.01)   **H02J 7/00** (2026.01)
**H02J 50/80** (2016.01)   **H02J 50/90** (2016.01)

(52) Cooperative Patent Classification (CPC):
**B60L 5/00; B60L 53/12; B60L 53/51; B60L 53/52;
B60L 53/53; B60L 53/65; B60L 53/66; B60M 7/00;
G01S 5/14; G01S 11/08; G01S 13/74; H02J 7/00;
H02J 50/80; H02J 50/90**

(86) International application number:
**PCT/JP2024/012515**

(87) International publication number:
**WO 2024/204470 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.03.2023 JP 2023054022**

(71) Applicant: **The Chugoku Electric Power Co., Inc.**
**Hiroshima-shi, Hiroshima 730-8701 (JP)**

(72) Inventors:
- **FUKUHARA Yoji**
  **Hiroshima-shi, Hiroshima 730-8701 (JP)**
- **KAMATA Ryosuke**
  **Hiroshima-shi, Hiroshima 730-8701 (JP)**
- **TANABE Ryota**
  **Hiroshima-shi, Hiroshima 730-8701 (JP)**
- **TAKANO Tomohiro**
  **Hiroshima-shi, Hiroshima 730-8701 (JP)**
- **TOYOTA Mitsuo**
  **Hiroshima-shi, Hiroshima 730-8701 (JP)**
- **KAMINO Kenta**
  **Hiroshima-shi, Hiroshima 730-8701 (JP)**
- **TAKI Yoshihiko**
  **Tokyo 102-0094 (JP)**

(74) Representative: **Hoffmann Eitle**
**Patent- und Rechtsanwälte PartmbB**
**Arabellastraße 30**
**81925 München (DE)**

(54) **MOBILE BODY POSITION MEASURING SYSTEM FOR POWER SUPPLY**

(57)     An object of the present invention is to provide a system of controlling the position of the mobile object.

A system comprising a mobile wireless device provided in a mobile object, and a fixed wireless device fixed at a predetermined position, the system comprising a distance calculator that calculates a distance between the mobile wireless device and the fixed wireless device, wherein the distance calculator calculates the distance on a basis of a propagation time of communication between the mobile wireless device and the fixed wireless device, and calculates the distance on a basis of a time deviation between an internal clock provided in the mobile wireless device and an internal clock provided in the fixed wireless device.

EP 4 692 846 A1

# FIG. 5

| FIXED WIRELESS DEVICE | MOBILE WIRELESS DEVICE |
|---|---|

DISTANCE CALCULATION PROCESSING

S101 — TRANSMIT SIGNAL → S102 RECEIVE SIGNAL

S104 — RECEIVE SIGNAL ← S103 TRANSMIT SIGNAL

S106 — RECEIVE INFORMATION ON PHASE OF MOBILE WIRELESS DEVICE ← S105 TRANSMIT INFORMATION ON PHASE OF MOBILE WIRELESS DEVICE

S107 — CALCULATE PHASE DEVIATION

S108 — TRANSMIT PHASE DEVIATION CORRECTION INSTRUCTION → S109 RECEIVE PHASE DEVIATION CORRECTION INSTRUCTION

S110 — CORRECT PHASE DEVIATION

S112 — RECEIVE SIGNAL ← S111 TRANSMIT SIGNAL

S113 — TRANSMIT SIGNAL → S114 RECEIVE SIGNAL

S116 — RECEIVE INFORMATION ON TIME OF MOBILE WIRELESS DEVICE ← S115 TRANSMIT INFORMATION ON TIME OF MOBILE WIRELESS DEVICE

S117 — CALCULATE TIME DEVIATION

S118 — TRANSMIT TIME DEVIATION CORRECTION INSTRUCTION → S119 RECEIVE TIME DEVIATION CORRECTION INSTRUCTION

S120 — CORRECT TIME DEVIATION

S122 — RECEIVE INFORMATION ON TIME OF MOBILE WIRELESS DEVICE ← S121 TRANSMIT INFORMATION ON TIME OF MOBILE WIRELESS DEVICE

S123 — CALCULATE PROPAGATION TIME

S124 — CALCULATE DISTANCE

END

**Description**

Technical Field

The present invention relates to a system, a method, a mobile wireless device, a fixed wireless device, and a mobile object.

Background Art

A mobile object using electricity as an energy source, such as an electric vehicle and a drone, is known. In addition, as a method for supplying power to a mobile object using electricity as an energy source, a method of non-contact power supply without a metal contact, a connector, or the like is known.

In order to efficiently perform non-contact power supply, it is necessary to appropriately maintain a distance and a positional relationship between a non-contact power supply device and a non-contact power receiving device provided in a mobile object.

For example, Patent Literature 1 refers to an apparatus that supports parking of an electric vehicle by measuring a distance from the electric vehicle to a power transmission coil using a camera and a sensor.

Citation List

Patent Literature

Patent Literature 1: JP 2022-64583 A

Summary of Invention

Technical Problem

At least one object of the present invention is to provide a system of controlling the position of the mobile object.

Solution to Problem

According to the invention, the above object is achieved by any of the following:

[1] A system comprising a mobile wireless device provided in a mobile object, and a fixed wireless device fixed at a predetermined position, the system comprising a distance calculator that calculates a distance between the mobile wireless device and the fixed wireless device, wherein the distance calculator calculates the distance on a basis of a propagation time of communication between the mobile wireless device and the fixed wireless device, and calculates the distance on a basis of a time deviation between an internal clock provided in the mobile wireless device and an internal clock provided in the fixed wireless device;

[2] The system according to [1], comprising: a time deviation calculator that calculates the time deviation between the internal clock provided in the mobile wireless device and the internal clock provided in the fixed wireless device by transmitting and receiving a signal between the mobile wireless device and the fixed wireless device; and a time deviation corrector that corrects a time deviation of the internal clock provided in the mobile wireless device on a basis of the calculated time deviation, wherein the distance calculator calculates the distance after the time deviation corrector corrects the time deviation;

[3] The system according to [2], comprising: a phase deviation calculator that calculates a phase deviation between the internal clock provided in the mobile wireless device and the internal clock provided in the fixed wireless device by transmitting and receiving a signal between the mobile wireless device and the fixed wireless device; and a phase deviation corrector that corrects a phase deviation of the internal clock provided in the mobile wireless device on a basis of the calculated phase deviation, wherein the time deviation calculator calculates the time deviation after the phase deviation corrector corrects the phase deviation;

[4] The system according to any one of [1] to [3], wherein the fixed wireless device is provided in a vicinity of a non-contact power supply device, the system comprising a first power supply starter that starts power supply from the non-contact power supply device to the mobile object in a case where the calculated distance between the mobile wireless device and the fixed wireless device satisfies a first predetermined condition;

[5] The system according to any one of [1] to [3], wherein at least three of the fixed wireless devices are provided around a non-contact power supply device, the system comprising: a position specifier that specifies a position of the mobile wireless device on a basis of the calculated distance between the mobile wireless device and the fixed wireless device; and a second power supply starter that starts power supply from the non-contact power supply device to the mobile object in a case where the specified position of the mobile wireless device satisfies a second predetermined condition;

[6] The system according to [4] or [5], comprising a power supply stopper that stops power supply from the non-contact power supply device to the mobile object in a case where an amount of power supplied from the non-contact power supply device to the mobile object reaches a predetermined amount or in a case where a time during which the non-contact power supply device supplies power to the mobile object reaches a predetermined length;

[7] The system according to any one of [4] to [6], comprising a power supply information storage that stores identification information for identifying the mobile object receiving power supply from the non-contact power supply device or identification information for identifying a user of the mobile object, information on an amount of power supplied from the non-contact power supply device to the mobile object, and/or information on a length of time during which the non-contact power supply device supplies power to the mobile object;

[8] The system according to any one of [4] to [7], comprising: a power supply fee calculator that calculates a power supply fee on a basis of identification information for identifying the mobile object receiving power supply from the non-contact power supply device or identification information for identifying a user of the mobile object, information on an amount of power supplied from the non-contact power supply device to the mobile object, and/or information on a length of time during which the non-contact power supply device supplies power to the mobile object; and a power supply fee transmitter that transmits the identification information for identifying the mobile object or the identification information for identifying the user of the mobile object and information on the calculated power supply fee to another computer apparatus;

[9] The system according to any one of [4] to [8], wherein the non-contact power supply device includes a battery, the system comprising a power generation system using natural energy, wherein the power generation system supplies generated power to the battery;

[10] A method comprising a distance calculation step of calculating a distance between a mobile wireless device provided in a mobile object and a fixed wireless device fixed at a predetermined position, wherein the distance calculation step calculates the distance on a basis of a propagation time of communication between the mobile wireless device and the fixed wireless device, and calculates the distance on a basis of a time deviation between an internal clock provided in the mobile wireless device and an internal clock provided in the fixed wireless device;

[11] A mobile wireless device in a system comprising the mobile wireless device provided in a mobile object, and a fixed wireless device fixed at a predetermined position, the mobile wireless device comprising: a communication connector that connects with the fixed wireless device by communication; and a distance calculator that calculates a distance between the mobile wireless device and the fixed wireless device on a basis of a propagation time of communication between the mobile wireless device and the fixed wireless device, wherein the distance calculator calculates the distance on a basis of a time deviation between an internal clock provided in the mobile wireless device and an internal clock provided in the fixed wireless device;

[12] A fixed wireless device in a system comprising a mobile wireless device provided in a mobile object, and the fixed wireless device fixed at a predetermined position, the fixed wireless device comprising: a communication connector that connects with the mobile wireless device by communication; and a distance calculator that calculates a distance between the mobile wireless device and the fixed wireless device on a basis of a propagation time of communication between the mobile wireless device and the fixed wireless device, wherein the distance calculator calculates the distance on a basis of a time deviation between an internal clock provided in the mobile wireless device and an internal clock provided in the fixed wireless device;

[13] A mobile object comprising the mobile wireless device according to [11].

Advantageous Effects of Invention

According to the present invention, it is possible to provide a system of controlling the position of the mobile object.

Brief Description of Drawings

Fig. 1 is a block diagram illustrating a configuration of a system according to the embodiment of the present invention.
Fig. 2 is a block diagram illustrating a hardware configuration of the mobile wireless device according to the embodiment of the present invention.
Fig. 3 is a block diagram illustrating a hardware configuration of the control apparatus according to the embodiment of the present invention.

Fig. 4 is a block diagram illustrating a hardware configuration of the information processing apparatus according to the embodiment of the present invention.

Fig. 5 is a diagram illustrating a flowchart of distance calculation processing according to the embodiment of the present invention.

Fig. 6 is a diagram illustrating a flowchart of the power supply start determination processing according to the embodiment of the present invention.

Fig. 7 is a diagram illustrating a flowchart of the power supply processing according to the embodiment of the present invention.

Fig. 8 is a block diagram illustrating a configuration of a system according to the embodiment of the present invention.

Fig. 9 is a diagram illustrating a flowchart of the power supply start determination processing according to the embodiment of the present invention.

Description of Embodiments

Hereinafter, embodiments of the invention will be described. However, the invention is not limited to the following embodiments without departing from the spirit and scope of the invention. The order of the respective processes constituting the flowchart described hereinafter may be changed as long as such a change does not cause contradictions or inconsistencies in the processing contents. Furthermore, as long as it does not cause any contradictions or inconsistencies in the processing contents, some of the processes constituting the flowchart may be omitted, or new processes may be added. Furthermore, an apparatus that primarily executes each process of the flowchart may be changed to another apparatus, provided that such a change does not depart from the spirit of the present invention. In that case, it is also possible to modify the processing contents so as to avoid any contradictions or inconsistencies.

[First Embodiment]

First, a first embodiment of the present invention will be described. In the first embodiment of the present invention, a non-contact power supply device provided in a power supply spot supplies power to a non-contact power receiving device provided in a mobile object on the basis of a distance between a mobile wireless device provided in the mobile object and a fixed wireless device provided in the vicinity of the non-contact power supply device.

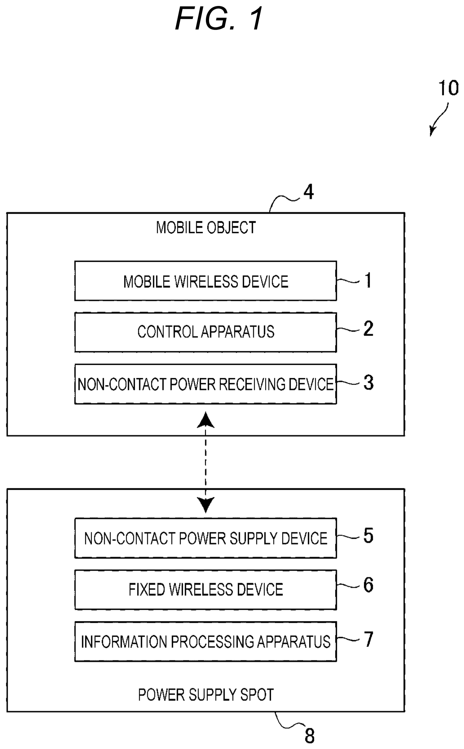

Fig. 1 is a block diagram illustrating a configuration of a system according to the embodiment of the present invention. In the first embodiment of the present invention, a system 10 includes a mobile object 4 including a mobile wireless device 1, a control apparatus 2, and a non-contact power receiving device 3, and a power supply spot 8 including a non-contact power supply device 5, a fixed wireless device 6, and an information processing apparatus 7.

The control apparatus 2 is communicably connected to the non-contact power receiving device 3 and the mobile wireless device 1 in a wired or wireless manner. The information processing apparatus 7 is communicably connected to the non-contact power supply device 5 and the fixed wireless device 6 in a wired or wireless manner. In addition, the control apparatus 2 and the information processing apparatus 7 are communicably connected to each other in a wired or wireless manner. Furthermore, the mobile wireless device 1 and the fixed wireless device 6 can be connected to each other by wireless communication.

The mobile object 4 is not particularly limited as long as the mobile object includes the non-contact power receiving device 3 capable of receiving power supplied in a non-contact manner. Examples of the mobile object 4 include a vehicle such as an electric vehicle and a flying object such as a drone.

The power supply spot 8 is not particularly limited as long as the spot includes the non-contact power supply device 5 capable of performing non-contact power supply to the mobile object 4. The power supply spot 8 may be installed in a parking lot of a commercial facility, a public facility, an accommodation facility, a rest facility, or the like. The power supply spot 8 may also be installed outdoors or indoors.

A method of non-contact power supply may be a non-radiation type or a radiation type. Examples of the non-radiation type non-contact power supply method include an electromagnetic induction method, a magnetic field resonance method, and an electric field coupling method. In addition, examples of the radiation-type non-contact power supply method include a microwave method and a laser method.

The non-contact power supply device 5 and the non-contact power receiving device 3 are not particularly limited as long as the non-contact power supply device 5 can transmit power to the non-contact power receiving device 3 in a non-contact state. The non-contact power supply device 5 and the non-contact power receiving device 3 can be appropriately designed according to the method of non-contact power supply. For example, in a case where the method of non-contact power supply is the electromagnetic induction method, the non-contact power supply device 5 may include a power transmission coil, and the non-contact power receiving device 3 may include a power reception coil. For example, in a case where the method of non-contact power supply is the magnetic field resonance method, the non-contact power supply device 5 may include a power transmission coil and a capacitor, and the non-contact power receiving device 3 may include a power reception coil and a capacitor.

In addition, the non-contact power supply device 5 and the non-contact power receiving device 3 each include a control unit for controlling non-contact power supply, and a communication unit for establishing communication connection with the mobile wireless device 1, the control apparatus 2, the non-contact power receiving device 3, the non-contact power supply device 5, the fixed wireless device 6, and/or the information processing apparatus 7. Furthermore, the non-contact power supply device 5 and the non-contact power receiving device 3 may each include an inverter that converts an alternating current into a direct current, a rectifier that converts an alternating current into a direct current, a voltage conversion unit that converts a voltage of a current, a sensor that detects a current or a voltage, and the like.

In the first embodiment, the expressions that "the non-contact power supply device 5 performs non-contact power supply to the mobile object 4" and "the non-contact power supply device 5 performs non-contact power supply to the non-contact power receiving device 3" both mean "the non-contact power supply device 5 provided in the power supply spot 8 performs non-contact power supply to the non-contact power receiving device 3 provided in the mobile object 4". In addition, the power supplied from the non-contact power supply device 5 to the mobile object 4 is charged into a driving battery provided in the mobile object 4.

In addition, the non-contact power supply device 5 may include a battery. Furthermore, although not illustrated, the system may include a power generation system using natural energy, and power generated by the power generation system may be supplied to the battery provided in the non-contact power supply device 5. The power generation system using natural energy can include a solar power generation system, a wind power generation system, and the like. The power supplied to the battery provided in the non-contact power supply device 5 may be used for power supply to the mobile object 4 or may be used inside the non-contact power supply device 5.

Since the non-contact power supply device includes the battery, the system includes the power generation system using natural energy, and the power generation system supplies generated power to the battery as described above, environmental load can be reduced.

The mobile wireless device 1 only needs to be provided in the mobile object 4 so as to enable communication connection with the fixed wireless device 6.

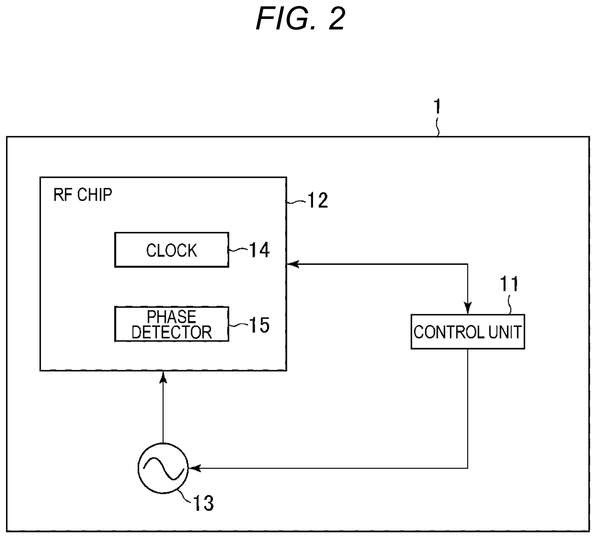

Fig. 2 is a block diagram illustrating a hardware configuration of the mobile wireless device according to the embodiment of the present invention. The mobile wireless device 1 includes a control unit 11, an RF chip 12, an oscillator 13, a clock 14, and a phase detector 15. The RF chip 12 includes the clock 14 and the phase detector 15. The mobile wireless device 1 may include an element other than the control unit 11, the RF chip 12, the oscillator 13, the clock 14, and the phase detector 15 as necessary.

The control unit 11 is not particularly limited, but for example, a microcomputer (microcontroller) can be used. The control unit 11 performs program execution processing based on a program and data. The RF chip 12 executes reception and transmission processing of a radio signal. Data received by the RF chip 12 is subjected to arithmetic processing by the control unit 11.

The oscillator 13 oscillates at a predetermined frequency and outputs a signal for giving an operational timing of each unit of the device. As the oscillator 13, an atomic oscillator or a crystal oscillator can be used. The clock 14 clocks the output signal of the oscillator 13 as a vibration source and outputs time. The time clocked by the clock 14 is controlled by the control unit 11 so as to be transmitted to the fixed wireless device 6 via the RF chip 12. The phase detector 15 detects the phase of a carrier wave constituting information received from the fixed wireless device 6, and detects the phase of the signal oscillated by the oscillator 13 in the mobile wireless device 1.

In addition, the fixed wireless device 6 only needs to be provided in the vicinity of the non-contact power supply device 5 so as to enable communication connection with the mobile wireless device 1. A configuration similar to that in Fig. 2 can be adopted as the configuration of the fixed wireless device 6.

Hereinafter, the clock 14 provided in the mobile wireless device 1 is also referred to as an internal clock of the mobile wireless device 1. In addition, the clock provided in the fixed wireless device 6 is also referred to as an internal clock of the fixed wireless device 6.

The control apparatus 2 is not particularly limited as long as it is provided in the mobile object 4, includes at least a CPU and the like, and can execute information processing. The control apparatus 2 may be, for example, a tablet terminal, a smartphone, or the like.

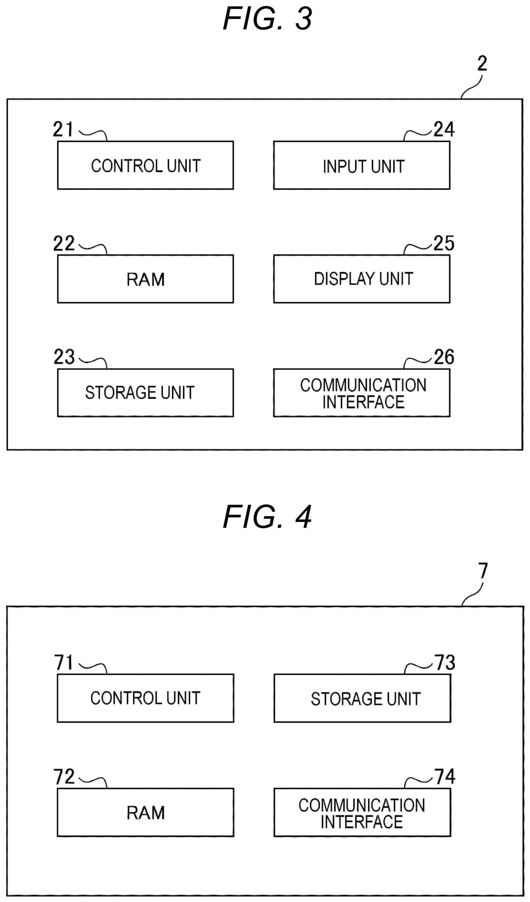

Fig. 3 is a block diagram illustrating a hardware configuration of the control apparatus according to the embodiment of the present invention. The control apparatus 2 includes a control unit 21, a RAM 22, a storage unit 23, an input unit 24, a display unit 25, and a communication interface 26, which are connected by a bus.

The control unit 21 includes a CPU and a ROM. The control unit 21 executes a program stored in the storage unit 23 and controls the control apparatus 2. The RAM 22 is a work area of the control unit 21. The storage unit 23 is a storage region for saving programs and data. That is, the storage unit 23 functions as a recording medium storing programs. The control unit 21 executes arithmetic processing on the basis of a program and data read from the RAM 22 and data input by the input unit 24.

The display unit 25 has a display screen. The control unit 21 outputs a video signal for displaying an image on the display screen according to the result of arithmetic processing. Here, the display screen of the display unit 25 may be a touch panel including a touch sensor. In this case, the touch panel functions as the input unit 24.

The communication interface 26 can be connected to a communication network in a wireless or wired manner, and can transmit and receive data to and from another computer apparatus via the communication network. Data received via the communication interface 26 is loaded into the RAM 22, and arithmetic processing is performed by the control unit 21.

In addition, the control apparatus 2 may be able to control movement of the mobile object 4 by the control unit 21. Furthermore, the control apparatus 2 may include a voice output unit.

Note that the control apparatus 2 only needs to include at least the control unit 21 and the communication interface 26. For example, the control apparatus 2 may not include the display unit 25.

For example, in a case where the mobile object 4 is a manned object such as a vehicle in which a driving operation is performed by a user, the control apparatus 2 may include the display unit 25. The display unit 25 may display information such as a current position of the mobile object 4, how to move to an optimum position for supplying power to the mobile object 4, and a charging state of the driving battery provided in the mobile object 4. In addition, the display unit 25 may enable operation input such as an instruction to start power supply or an instruction to stop power supply, and an instruction of the amount of power to be supplied.

Alternatively, for example, in a case where the mobile object 4 is an unmanned object such as a drone or a self-driving vehicle, the control apparatus 2 may not include the display unit 25. In this case, the control apparatus 2 may include the communication interface 26 to receive a control signal for moving the mobile object 4 to an optimum position for supplying power to the mobile object 4 from another computer apparatus.

The information processing apparatus 7 is not particularly limited as long as it is connected to the control apparatus 2, the non-contact power supply device 5, and the fixed wireless device 6 by communication and can perform information processing. In Fig. 1, the information processing apparatus 7 is provided in the power supply spot 8, but the information processing apparatus 7 may be provided in a place other than the power supply spot 8. The information processing apparatus 7 may be, for example, a server apparatus or the like. In addition, the information processing apparatus 7 may function in a distributed manner in a plurality of computer apparatuses. For example, instead of the information processing apparatus 7, a distributed ledger technology such as a blockchain may be used.

Fig. 4 is a block diagram illustrating a configuration of the information processing apparatus according to the embodiment of the present invention. The information processing apparatus 7 includes at least a control unit 71, a RAM 72, a storage unit 73, and a communication interface 74, which are connected by an internal bus.

The control unit 71 includes a CPU and a ROM, executes a program stored in the storage unit 73, and controls the information processing apparatus 7. In addition, the control unit 71 includes an internal timer that clocks time. The RAM 72 is a work area of the control unit 71. The storage unit 73 is a storage region for saving programs and data. That is, the storage unit 73 functions as a recording medium storing programs. The control unit 71 reads a program and data from the RAM 72, and performs program execution processing based on information or the like received from the control apparatus 2, the non-contact power supply device 5, and/or the fixed wireless device 6.

The information processing apparatus 7 may also include a display unit, an input unit, a voice output unit, and the like.

Note that the program may be stored in a recording medium such as a CD-ROM. In this case, the program stored in the recording medium may be installed in the control apparatus 2 or the information processing apparatus 7 to execute a predetermined function.

Hereinafter, an aspect will be described in which the system according to the first embodiment of the present invention guides the mobile object 4 to the power supply spot 8 and the non-contact power supply device 5 provided in the power supply spot 8 supplies power to the non-contact power receiving device 3 provided in the mobile object 4.

In the first embodiment of the present invention, in the mobile object 4, the mobile wireless device 1 may be provided in the vicinity of the non-contact power receiving device 3 provided in the mobile object 4, or may not be provided in the vicinity of the non-contact power receiving device 3 provided in the mobile object 4.

"The mobile wireless device 1 is provided in the vicinity of the non-contact power receiving device 3" means that the mobile wireless device 1 is provided within a predetermined range from the non-contact power receiving device 3. The predetermined range is not particularly limited, and can be appropriately designed. For example, the range may have a radius of 1 cm, a radius of 5 cm, a radius of 15 cm, a radius of 30 cm, or a radius of 50 cm.

In a case where the mobile wireless device 1 is provided in the vicinity of the non-contact power receiving device 3, the mobile wireless device 1 may be formed integrally with the non-contact power receiving device 3, or may be formed separately from the non-contact power receiving device 3. Both the mobile wireless device 1 and the non-contact power receiving device 3 may be provided within a range in which non-contact power supply from the non-contact power supply device 5 can be received with substantially equal power supply efficiency. That is, the mobile wireless device 1 and the non-contact power receiving device 3 may be provided within a range in which the power supply efficiency is substantially equal between a case where the non-contact power supply device 5 performs non-contact power supply to a position where the mobile wireless device 1 is provided and a case where the non-contact power supply device 5 actually performs non-contact power supply to the non-contact power receiving device 3.

In addition, examples of the case where the mobile wireless device 1 is not provided in the vicinity of the non-contact power receiving device 3 include a case where the mobile object 4 is an electric vehicle, the mobile wireless device 1 is provided in a rear portion of the electric vehicle, and the non-contact power receiving device 3 is provided in a front portion of the electric vehicle. In this case, the mobile wireless device 1 and the non-contact power receiving device 3 do not have to be provided within the range in which non-contact power supply from the non-contact power supply device 5 can be received with substantially equal power supply efficiency. That is, the mobile wireless device 1 and the non-contact power receiving device 3 do not have to be provided within the range in which the power supply efficiency is substantially equal between a case where the non-contact power supply device 5 performs non-contact power supply to a position where the mobile wireless device 1 is provided and a case where the non-contact power supply device 5 actually performs non-contact power supply to the non-contact power receiving device 3.

Information on a positional relationship between the mobile wireless device 1 and the non-contact power receiving device 3 provided in the mobile object 4, information on a position where the mobile wireless device 1 is provided in the mobile object 4, and/or information on a position where the non-contact power receiving device 3 is provided in the mobile object 4 may be stored in the storage unit 23 of the control apparatus 2 provided in the mobile object 4. In addition, the information on a position where the mobile wireless device 1 is provided in the mobile object 4 and/or the information on a position where the non-contact power receiving device 3 is provided in the mobile object 4 may include information on the size and shape of the mobile object 4.

Note that the "position of the non-contact power receiving device 3" may be the position of a place where the non-contact power receiving device 3 actually receives power supplied in a non-contact manner. For example, the "position of the non-contact power receiving device 3" may be the position of the power reception coil provided in the non-contact power receiving device 3.

In addition, in the first embodiment of the present invention, the fixed wireless device 6 is provided in the vicinity of the non-contact power supply device 5 provided in the power supply spot 8 at the power supply spot 8.

"The fixed wireless device 6 is provided in the vicinity of the non-contact power supply device 5" means that the fixed wireless device 6 is provided within a predetermined range from the non-contact power supply device 5. The predetermined range is not particularly limited, and can be appropriately designed. For example, the range may have a radius of 1 cm, a radius of 5 cm, a radius of 15 cm, a radius of 30 cm, or a radius of 50 cm.

The fixed wireless device 6 may be formed integrally with the non-contact power supply device 5, or may be formed separately from the non-contact power supply device 5. In addition, the fixed wireless device 6 and the non-contact power supply device 5 may be provided within a range in which the power supply efficiency is substantially equal between a case where non-contact power supply is performed on the non-contact power receiving device 3 from a position where the fixed wireless device 6 is provided and a case where non-contact power supply is performed on the non-contact power receiving device 3 from a position where the non-contact power supply device 5 is actually provided.

Information on a positional relationship between the fixed wireless device 6 and the non-contact power supply device 5 provided in the power supply spot 8, information on a position where the fixed wireless device 6 is provided in the power supply spot 8, information on a position where the non-contact power supply device 5 is provided in the power supply spot 8, and/or information on a range in which the non-contact power supply device 5 can supply power with predetermined power supply efficiency may be stored in the storage unit 73 of the information processing apparatus 7 provided in the power supply spot 8. In addition, the information on a position where the fixed wireless device 6 is provided in the power supply spot 8 and/or the information on a position where the non-contact power supply device 5 is provided in the power supply spot 8 may include information on the size and shape of the power supply spot 8.

Note that the "position of the non-contact power supply device 5" may be the position of a place where the non-contact power supply device 5 actually performs non-contact power supply. For example, the "position of the non-contact power supply device 5" may be the position of the power supply coil provided in the non-contact power supply device 5.

In the first embodiment of the present invention, the method of non-contact power supply may be the non-radiation type or the radiation type. In addition, the non-contact power supply device 5 may be provided in the ground.

The fixed wireless device 6 provided in the vicinity of the non-contact power supply device 5 transmits a signal to the surroundings at predetermined intervals so as to enable mutual transmission and reception of the signal when the mobile wireless device 1 approaches the fixed wireless device 6. The predetermined interval is not particularly limited, and can be appropriately designed. For example, the fixed wireless device 6 may transmit a signal at intervals of 30 seconds, at intervals of 1 minute, at intervals of 5 minutes, or at intervals of 10 minutes. The predetermined interval may be an interval that does not interfere with the guidance of the mobile object 4.

In a case where the mobile object 4 moves toward the power supply spot 8 and enters a range reached by the signal transmitted from the fixed wireless device 6, the mobile wireless device 1 provided in the mobile object 4 receives the signal transmitted from the fixed wireless device 6. Then, the fixed wireless device 6 calculates a distance between the mobile wireless device 1 and the fixed wireless device 6.

The distance between the mobile wireless device 1 and the fixed wireless device 6 is calculated on the basis of a propagation time of communication between the mobile wireless device 1 and the fixed wireless device 6. For example, the distance between the mobile wireless device 1 and the fixed wireless device 6 can be calculated by multiplying the propagation time of communication between the mobile wireless device 1 and the fixed wireless device 6 by a propagation speed of the communication.

The propagation time of the communication between the mobile wireless device 1 and the fixed wireless device 6 can be calculated by transmitting and receiving a signal between the mobile wireless device 1 and the fixed wireless device 6 and obtaining a difference between a transmission time of the signal and a reception time of the signal. The transmission time of the signal and the reception time of the signal are clocked by the internal clock provided in the mobile wireless device 1 and the internal clock provided in the fixed wireless device 6. Therefore, the smaller a time deviation between the internal clock provided in the mobile wireless device 1 and the internal clock provided in the fixed wireless device 6, the more accurately the propagation time can be calculated.

In addition, there may be a deviation between the phase of the internal clock provided in the mobile wireless device 1, that is, the phase of a signal oscillated by the oscillator 13 in the mobile wireless device 1, and the phase of the internal clock provided in the fixed wireless device 6, that is, the phase of a signal oscillated by the oscillator in the fixed wireless device 6. Hereinafter, the phase of the internal clock provided in the mobile wireless device 1 is also referred to as a phase of the mobile wireless device 1. In addition, the phase of the internal clock provided in the fixed wireless device 6 is also referred to as a phase of the fixed wireless device 6. Furthermore, the phase deviation between the internal clock provided in the mobile wireless device 1 and the internal clock provided in the fixed wireless device 6 is also referred to as a phase deviation between the fixed wireless device 6 and the mobile wireless device 1.

Note that the phase of the signal oscillated by the oscillator 13 in the mobile wireless device 1 may be equal to the phase of a carrier wave constituting information transmitted by the mobile wireless device 1. In addition, the phase of the signal oscillated by the oscillator in the fixed wireless device 6 may be equal to the phase of a carrier wave constituting information transmitted by the fixed wireless device 6.

Hereinafter, an example of calculating the distance between the mobile wireless device 1 and the fixed wireless device 6 after correcting the phase deviation between the internal clock provided in the mobile wireless device 1 and the internal clock provided in the fixed wireless device 6 and correcting the time deviation between the internal clock provided in the mobile wireless device 1 and the internal clock provided in the fixed wireless device 6 will be described.

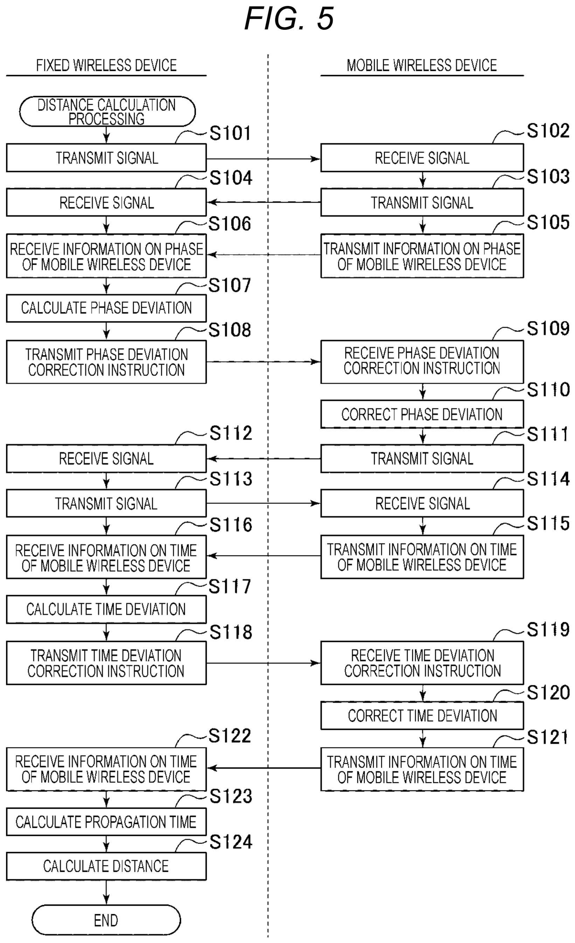

Fig. 5 is a diagram illustrating a flowchart of distance calculation processing according to the embodiment of the present invention.

First, the fixed wireless device 6 transmits a signal to the mobile wireless device 1 (step S101). Then, the mobile wireless device 1 receives the transmitted signal (step S102). Next, the mobile wireless device 1 transmits a signal to the fixed wireless device 6 (step S103). Then, the fixed wireless device 6 receives the transmitted signal (step S104).

After step S103 is performed, the mobile wireless device 1 transmits information on the phase of the mobile wireless device 1 to the fixed wireless device 6 (step S105). Then, the fixed wireless device 6 receives the transmitted phase information (step S106). The fixed wireless device 6 calculates the phase deviation between the fixed wireless device 6 and the mobile wireless device 1 (step S107). Next, the fixed wireless device 6 transmits an instruction to correct the phase deviation (hereinafter also referred to as a phase deviation correction instruction) of the mobile wireless device 1 to the mobile wireless device 1 (step S108). The mobile wireless device 1 receives the transmitted phase deviation correction instruction (step S109). Then, the mobile wireless device 1 corrects the phase deviation of the mobile wireless device 1 (step S110).

The signal in step S101 may be the signal transmitted from the fixed wireless device 6 to the surroundings at the predetermined intervals as described above. In addition, the signal may include a signal transmission request for requesting the fixed wireless device 6 that has transmitted the signal to transmit a signal.

In addition, when the fixed wireless device 6 transmits the signal in step S101, the fixed wireless device 6 may measure a phase when the signal is transmitted and store the phase in the memory in the control unit. The phase when the signal is transmitted may be the phase of a carrier wave constituting the transmitted signal.

Furthermore, when the mobile wireless device 1 receives the signal in step S102, the mobile wireless device 1 may measure a phase when the signal is received and store the phase in the memory in the control unit 11. The phase when the signal is received may be the phase of a signal oscillated by the oscillator of the mobile wireless device 1 when the signal is received.

In addition, when the mobile wireless device 1 transmits the signal in step S103, the mobile wireless device 1 may measure a phase when the signal is transmitted and store the phase in the memory in the control unit 11. The phase when the signal is transmitted may be the phase of a carrier wave constituting the transmitted signal.

Furthermore, when the fixed wireless device 6 receives the signal in step S104, the fixed wireless device 6 may measure a phase when the signal is received and store the phase in the memory in the control unit. The phase when the signal is received may be the phase of a signal oscillated by the oscillator of the clock of the fixed wireless device 6 when the signal is received.

The information on the phase of the mobile wireless device 1 transmitted to the fixed wireless device 6 in step S105 may include information on the phase when the mobile wireless device 1 receives the signal in step S102 and information on the phase when the mobile wireless device 1 transmits the signal in step S103.

In step S107, the phase deviation can be calculated on the basis of a phase difference between the phase of the carrier wave constituting the signal transmitted from the fixed wireless device 6 to the mobile wireless device 1 and the phase of the signal oscillated by the oscillator of the mobile wireless device 1 when the signal is received by the mobile wireless device 1, and a phase difference between the phase of the carrier wave constituting the signal transmitted from the mobile wireless device 1 to the fixed wireless device 6 and the phase of the signal oscillated by the oscillator of the clock of the fixed wireless device 6 when the signal is received by the fixed wireless device 6.

The phase of the carrier wave constituting the signal transmitted from the fixed wireless device 6 to the mobile wireless device 1 is the phase of the signal transmitted in step S101. The phase of the signal oscillated by the oscillator of the mobile wireless device 1 when the signal is received by the mobile wireless device 1 is the phase of the signal received in step S102. The phase of the carrier wave constituting the signal transmitted from the mobile wireless device 1 to the fixed wireless device 6 is the phase of the signal transmitted in step S103. The phase of the signal oscillated by the oscillator of the clock of the fixed wireless device 6 when the signal is received by the fixed wireless device 6 is the phase of the signal received in step S104.

A phase difference $\Delta\Phi_P$ generated by the signal propagating between the fixed wireless device 6 and the mobile wireless device 1 can be calculated from the arithmetic mean of a phase difference $\Delta\Phi_M$ and a phase difference $\Delta\Phi_F$, by defining: as $\Delta\Phi_M$, the phase difference between the phase of the carrier wave constituting the signal transmitted from the fixed wireless device 6 to the mobile wireless device 1 and the phase of the signal oscillated by the oscillator of the mobile wireless device 1 when the signal is received by the mobile wireless device 1; and as $\Delta\Phi_F$, the phase difference between the phase of the carrier wave constituting the signal transmitted from the mobile wireless device 1 to the fixed wireless device 6 and the phase of the signal oscillated by the oscillator of the fixed wireless device 6 when the signal is received by the fixed wireless device 6. That is, the phase difference $\Delta\Phi_P$ can be calculated by Equation (1): $\Delta\Phi_P = 1/2 \times (\Delta\Phi_M + \Delta\Phi_F)$.

When the phase deviation between the fixed wireless device 6 and the mobile wireless device 1 is defined as $\Delta\Phi_C$, the relationship expressed by

$$\text{Equation (2): } \Delta\Phi_F = \Delta\Phi_P + (-\Delta\Phi_C)$$

is established, so that the phase deviation $\Delta\Phi_C$ can be calculated by subtracting the phase difference $\Delta\Phi_F$ from the phase difference $\Delta\Phi_P$. That is, the phase difference $\Delta\Phi_C$ can be calculated by

$$\text{Equation (3): } \Delta\Phi_C = 1/2 \times (\Delta\Phi_M - \Delta\Phi_F).$$

In step S107, the phase deviation between the fixed wireless device 6 and the mobile wireless device 1 may be calculated using Equation (3).

Here, the phase deviation $\Delta\Phi_C$ is calculated by Equation (3), but in some cases, the phase deviation $\Delta\Phi_C$ to be calculated may be obtained by further subtracting $2\pi$ or $4\pi$, that is, $2n\pi$. n may take zero or a positive integer. Therefore, it is also possible to specify whether n is zero, or an integer such as 1 or 2 (that is, whether the value obtained by further subtracting $2n\pi$ from the phase difference $\Delta\Phi_C$ obtained by Equation (3) is the original phase deviation or whether the value not subtracted is the original phase deviation) on the basis of a propagation time to be described later or a time deviation between the fixed wireless device 6 and the mobile wireless device 1.

There may be a case in which the signal transmitted from the fixed wireless device 6 to the mobile wireless device 1 and the signal transmitted from the mobile wireless device 1 to the fixed wireless device 6 start with an output that is not zero but is an arbitrary value at the start of transmission. In such a case, it is necessary to correct the phase deviation $\Delta\Phi_C$ by measuring the phase at the start of transmission and the transmission time. Meanwhile, by configuring such that the phase at the start of transmission is always constant and transmission is performed at a predetermined time, it is possible to omit such a processing of correcting $\Delta\Phi_C$ after measuring the phase at the start of transmission and the transmission time.

The phase deviation correction instruction in step S108 may be an instruction to correct the phase of the mobile wireless device 1 so as to be synchronized with the phase of the fixed wireless device 6.

In step S110, the mobile wireless device 1 may correct the phase of the mobile wireless device 1 so as to be synchronized with the phase of the fixed wireless device 6 on the basis of the calculated phase deviation $\Delta\Phi_C$. That is, the mobile wireless device 1 may correct the phase of the signal generated by the oscillator of the mobile wireless device 1 so as to be synchronized with the signal generated by the oscillator of the fixed wireless device 6 on the basis of the calculated phase deviation $\Delta\Phi_C$. The correction of the phase in step S110 is controlled and executed by the control unit 11 of the mobile wireless device 1.

In this manner, the phase of the mobile wireless device 1 is corrected so as to match the phase of the fixed wireless device 6, and therefore the frequencies of the clock 14 of the mobile wireless device 1 and the clock of the fixed wireless device 6 are also adjusted. That is, the phase is locked. When the phase lock is established, the clock 14 of the mobile wireless device 1 and the clock of the fixed wireless device 6 clock time at the same frequency. Here, an example of calculating and correcting the time deviation between the mobile wireless device 1 and the fixed wireless device 6 in a state where the phase lock is established will be described. While the phase lock continues, a time difference between the clock 14 of the mobile wireless device 1 and the clock of the fixed wireless device 6 does not change, so that it is possible to accurately compare the times.

After the phase deviation of the mobile wireless device 1 is corrected in step S110, the mobile wireless device 1 transmits a signal to the fixed wireless device 6 (step S111). Then, the fixed wireless device 6 receives the transmitted signal (step S112). Next, the fixed wireless device 6 transmits a signal to the mobile wireless device 1 (step S113). Then, the mobile wireless device 1 receives the transmitted signal (step S114).

Next, the mobile wireless device 1 transmits information on the time of the mobile wireless device 1 to the fixed wireless device 6 (step S115). Then, the fixed wireless device 6 receives the transmitted time information (step S116). The fixed wireless device 6 calculates the time deviation between the fixed wireless device 6 and the mobile wireless device 1 (step S117). Next, the fixed wireless device 6 transmits an instruction to correct the time deviation (hereinafter also referred to as a time deviation correction instruction) of the mobile wireless device 1 to the mobile wireless device 1 (step S118). The mobile wireless device 1 receives the transmitted time deviation correction instruction (step S119). Then, the mobile wireless device 1 corrects the time deviation of the mobile wireless device 1 (step S120).

The signal in step S111 may include a signal transmission request for requesting the mobile wireless device 1 that has transmitted the signal to transmit a signal.

In addition, when the mobile wireless device 1 transmits the signal in step S111, the mobile wireless device 1 may clock a time at which the signal is transmitted and store the time in the memory in the control unit 11.

Furthermore, when the fixed wireless device 6 receives the signal in step S112, the fixed wireless device 6 may clock a time at which the signal is received and store the time in the memory in the control unit.

In addition, when the fixed wireless device 6 transmits the signal in step S113, the fixed wireless device 6 may clock a time at which the signal is transmitted and store the time in the memory in the control unit.

Furthermore, when the mobile wireless device 1 receives the signal in step S114, the mobile wireless device 1 may clock a time at which the signal is received and store the time in the memory in the control unit 11.

The information on the time of the mobile wireless device 1 transmitted to the fixed wireless device 6 in step S115 may include information on the time at which the mobile wireless device 1 transmits the signal in step S111 and information on the time at which the mobile wireless device 1 receives the signal in step S114.

In step S107, the time deviation can be calculated on the basis of the time at which the mobile wireless device 1 transmits the signal to the fixed wireless device 6, the time at which the fixed wireless device 6 receives the signal, the time at which the fixed wireless device 6 transmits the signal to the mobile wireless device 1, and the time at which the mobile wireless device 1 receives the signal.

The time at which the fixed wireless device 6 transmits the signal to the mobile wireless device 1 is the time at which the signal is transmitted in step S111. The time at which the fixed wireless device 6 receives the signal is the time at which the signal is received in step S112. The time at which the fixed wireless device 6 transmits the signal to the mobile wireless device 1 is the time at which the signal is transmitted in step S113. The time at which the mobile wireless device 1 receives the signal is the time at which the signal is received in step S114.

A time deviation $T_L$ between the fixed wireless device 6 and the mobile wireless device 1 can be calculated by Equation (4): $T_L = 1/2 \times ((T_{MF} - T_M) - (T_{FM} - T_F))$, by defining: as $T_M$, the time at which the mobile wireless device 1 transmits the signal to the fixed wireless device 6; as $T_{MF}$, the time at which the fixed wireless device 6 receives the signal; as $T_F$, the time at which the fixed wireless device 6 transmits the signal to the mobile wireless device 1; and as $T_{FM}$, the time at which the fixed wireless device 6 receives the signal. In step S117, the time deviation $T_L$ between the fixed wireless device 6 and the mobile wireless device 1 may be calculated by Equation (4).

The time deviation correction instruction in step S118 may be an instruction to correct the time of the mobile wireless device 1 so as to be synchronized with the time of the fixed wireless device 6.

In step S120, the mobile wireless device 1 may correct the time of the mobile wireless device 1 so as to be synchronized with the time of the fixed wireless device 6 on the basis of the calculated time deviation $T_L$.

After the time deviation of the mobile wireless device 1 is corrected in step S120, the mobile wireless device 1 transmits information on the time of the mobile wireless device 1 to the fixed wireless device 6 (step S121). Then, the fixed wireless device 6 receives the transmitted time information (step S122). Next, the fixed wireless device 6 calculates the propagation time of communication between the fixed wireless device 6 and the mobile wireless device 1 (step S123). Then, the fixed wireless device 6 calculates the distance between the fixed wireless device 6 and the mobile wireless device 1 (step S124), and the distance calculation processing ends.

The information on the time of the mobile wireless device 1 in step S121 may include information on a time at which the mobile wireless device 1 transmits the information.

In step S123, the fixed wireless device 6 can calculate the propagation time of communication between the mobile wireless device 1 and the fixed wireless device 6 from a difference between a time at which the mobile wireless device 1 transmits the information in step S121 and a time at which the fixed wireless device 6 receives the information in step S122.

In step S124, the fixed wireless device 6 can calculate the distance between the mobile wireless device 1 and the fixed wireless device 6 by multiplying the propagation time calculated in step S123 by the propagation speed of the communication (for example, the speed of light).

As described above, the system includes: a time deviation calculator configured to calculate a time deviation between the internal clock provided in the mobile wireless device and the internal clock provided in the fixed wireless device by transmitting and receiving a signal between the mobile wireless device and the fixed wireless device; and a time deviation corrector configured to correct a time deviation of the internal clock provided in the mobile wireless device on the basis of the calculated time deviation, wherein a distance calculator calculates a distance after the time deviation corrector corrects the time deviation. As a result, the distance between the mobile wireless device and the fixed wireless device can be accurately calculated.

In addition, as described above, the system includes: a phase deviation calculator configured to calculate a phase deviation between the internal clock provided in the mobile wireless device and the internal clock provided in the fixed wireless device by transmitting and receiving a signal between the mobile wireless device and the fixed wireless device; and a phase deviation corrector configured to correct a phase deviation of the internal clock provided in the mobile wireless device on the basis of the calculated phase deviation, wherein the time deviation calculator calculates the time deviation after the phase deviation corrector corrects the phase deviation. As a result, the distance between the mobile wireless device and the fixed wireless device can be calculated more accurately.

In addition, as described above, the fixed wireless device in the system including the mobile wireless device provided in the mobile object, and the fixed wireless device fixed at a predetermined position, includes: a communication connector configured to connect with the mobile wireless device by communication; and a distance calculator configured to calculate a distance between the mobile wireless device and the fixed wireless device on the basis of a propagation time of communication between the mobile wireless device and the fixed wireless device, wherein the distance calculator calculates the distance on the basis of a time deviation between the internal clock provided in the mobile wireless device and the internal clock provided in the fixed wireless device. As a result, the system for controlling the position of the mobile object can be provided.

In the above description, an aspect has been described in which the fixed wireless device 6 calculates the phase deviation, gives the phase deviation correction instruction, calculates the time deviation, gives the time deviation correction instruction, calculates the propagation time, and calculates the distance. However, the calculation of the phase deviation, the phase deviation correction instruction, the calculation of the time deviation, the time deviation correction instruction, the calculation of the propagation time, and/or the calculation of the distance may be executed by the mobile wireless device 1, the control apparatus 2, and/or the information processing apparatus 7. In this case, the information necessary for each processing may be transmitted to the apparatus that executes each processing.

For example, the mobile wireless device 1 may calculate the distance between the mobile wireless device 1 and the fixed wireless device 6.

As described above, the mobile wireless device in the system including the mobile wireless device provided in the mobile object, and the fixed wireless device fixed at a predetermined position, includes: a communication connector configured to connect with the fixed wireless device by communication; and a distance calculator configured to calculate a distance between the mobile wireless device and the fixed wireless device on the basis of a propagation time of communication between the mobile wireless device and the fixed wireless device, wherein the distance calculator calculates the distance on the basis of a time deviation between the internal clock provided in the mobile wireless device and the internal clock provided in the fixed wireless device. As a result, the system for controlling the position of the mobile object can be provided.

Note that the method of calculating the phase deviation and the time deviation between the mobile wireless device 1 and the fixed wireless device 6 can be appropriately designed regardless of the above description. That is, the number of times of transmission and reception of signals between the mobile wireless device 1 and the fixed wireless device 6 and the content of information transmitted and received between the mobile wireless device 1 and the fixed wireless device 6 are not particularly limited. It is sufficient that the phase deviation and the time deviation between the mobile wireless device 1 and the fixed wireless device 6 can be calculated.

In addition, in the above description, an aspect has been described in which the distance is calculated after correcting the phase deviation and the time deviation between the mobile wireless device 1 and the fixed wireless device 6, but the distance may be calculated without correcting the phase deviation and/or the time deviation between the mobile wireless device 1 and the fixed wireless device 6.

For example, the distance may be calculated by correcting the time deviation between the mobile wireless device 1 and the fixed wireless device 6 without correcting the phase deviation between the mobile wireless device 1 and the fixed wireless device 6. In this case, steps S103 to S110 may not be performed.

Alternatively, for example, the distance may be calculated without correcting the phase deviation and the time deviation between the mobile wireless device 1 and the fixed wireless device 6. Specifically, for example, after correcting the phase deviation and the time deviation between the mobile wireless device 1 and the fixed wireless device 6, the distance may be calculated without correcting the phase deviation and the time deviation again within a predetermined time. Alternatively, for example, the distance may be calculated on the basis of the propagation time of a case where the phase deviation and the time deviation are theoretically corrected without actually correcting the phase deviation and the time deviation between the mobile wireless device 1 and the fixed wireless device 6.

A time deviation in a common clock is said to be less than one second per day. Therefore, after correcting the phase deviation and the time deviation between the mobile wireless device 1 and the fixed wireless device 6, the phase and time of the internal clock provided in the mobile wireless device 1 and the phase and time of the internal clock provided in the fixed wireless device 6 are considered to be equivalent to those when the phase deviation and the time deviation are corrected within a predetermined time.

Therefore, after correcting the phase deviation and the time deviation between the mobile wireless device 1 and the fixed wireless device 6, the propagation time when the phase deviation and the time deviation are corrected can be calculated by steps S121 to S123 without correcting the phase deviation and the time deviation again by steps S103 to S120 within a predetermined time.

The predetermined time may be 1 minute, 5 minutes, 10 minutes, 20 minutes, or 30 minutes.

In addition, the distance may be calculated by calculating the propagation time of a case where the phase deviation and the time deviation are theoretically corrected on the basis of the calculated phase deviation and time deviation without actually correcting the phase deviation and the time deviation between the mobile wireless device 1 and the fixed wireless device 6. In this case, by clocking and storing the time at which the signal is transmitted and/or received in steps S101 to S104 and transmitting the information on the time in step S105, steps S108 to S116 and steps S118 to S122 can be omitted.

That is, as long as the distance between the mobile wireless device 1 and the fixed wireless device 6 is calculated on the basis of the time deviation between the internal clock provided in the mobile wireless device 1 and the internal clock provided in the fixed wireless device 6, the phase deviation and the time deviation between the mobile wireless device 1 and the fixed wireless device 6 may or may not be corrected.

In addition, in the above description, an example has been described in which the distance between the mobile wireless device 1 and the fixed wireless device 6 is calculated by calculating the propagation time of the communication between the mobile wireless device 1 and the fixed wireless device 6, and multiplying the calculated propagation time by the propagation speed of the communication. However, the aspect of calculating the distance between the mobile wireless device 1 and the fixed wireless device 6 is not limited to this example.

For example, a signal may be transmitted and received between the mobile wireless device 1 and the fixed wireless device 6 without calculating the propagation time of the communication between the mobile wireless device 1 and the fixed wireless device 6, and the distance between the mobile wireless device 1 and the fixed wireless device 6 may be calculated from the transmission time of the signal, the reception time of the signal, and the propagation speed of the signal. In this case, the distance between the mobile wireless device 1 and the fixed wireless device 6 may be calculated in step S124 on the basis of the transmission time of the information in step S121, the reception time of the information in step S122, and the propagation speed of the information without performing step S123.

That is, the distance between the mobile wireless device 1 and the fixed wireless device 6 only needs to be calculated on the basis of the propagation time based on the time deviation between the internal clock provided in the mobile wireless device and the internal clock provided in the fixed wireless device.

Furthermore, in the above description, an example has been described in which correction is performed so that the phase and time of the internal clock provided in the mobile wireless device 1 are synchronized with the phase and time of the internal clock provided in the fixed wireless device 6. However, the aspect of correcting the phase deviation and the time deviation is not limited to this example. It is sufficient that the phase deviation and the time deviation between the internal clock provided in the mobile wireless device 1 and the internal clock provided in the fixed wireless device 6 are corrected. For example, correction may be performed so that the phase and time of the internal clock provided in the fixed wireless device 6 are synchronized with the phase and time of the internal clock provided in the mobile wireless device 1, or both the internal clock provided in the fixed wireless device 6 and the internal clock provided in the mobile wireless device 1 may be corrected so as to be synchronized with each other.

Note that control may be performed so as to change the communication frequency and the communication intensity between the fixed wireless device 6 and the mobile wireless device 1 according to the calculated distance between the fixed wireless device 6 and the mobile wireless device 1. For example, control may be performed so as to increase the communication frequency as the distance between the fixed wireless device 6 and the mobile wireless device 1 decreases. By performing control so as to increase the communication frequency as the distance between the fixed wireless device 6 and the mobile wireless device 1 decreases, the distance between the fixed wireless device 6 and the mobile wireless device 1 can be calculated frequently when power is supplied actually with the mobile object 4 approaching the non-contact power supply device 5. Such control may be performed by the control unit of the fixed wireless device 6.

Information on the distance between the mobile wireless device 1 and the fixed wireless device 6 calculated by the distance calculation processing described above is transmitted to the information processing apparatus 7 in power supply start determination processing described below. Then, the information processing apparatus 7 determines whether or not to start power supply from the non-contact power supply device 5 to the mobile object 4 on the basis of the distance between the mobile wireless device 1 and the fixed wireless device 6.

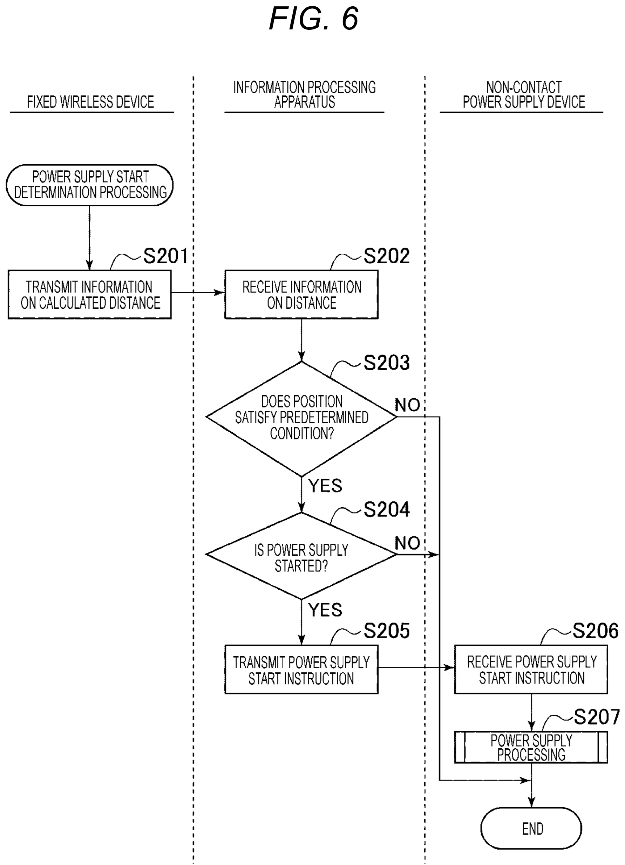

Fig. 6 is a diagram illustrating a flowchart of the power supply start determination processing according to the embodiment of the present invention.

The fixed wireless device 6 transmits the information on the distance between the mobile wireless device 1 and the fixed wireless device 6 calculated in step S124 of the distance calculation processing to the information processing apparatus 7 (step S201). The information processing apparatus 7 receives the transmitted information on the distance between the mobile wireless device 1 and the fixed wireless device 6 (step S202). The information processing apparatus 7 determines whether or not the distance between the mobile wireless device 1 and the fixed wireless device 6 satisfies a predetermined condition on the basis of the received information (step S203).

When determining that the distance between the mobile wireless device 1 and the fixed wireless device 6 satisfies the predetermined condition (Yes in step S203), the information processing apparatus 7 determines whether or not to start power supply from the non-contact power supply device 5 to the non-contact power receiving device 3 (step S204).

When determining to start power supply from the non-contact power supply device 5 to the non-contact power receiving device 3 (Yes in step S204), the information processing apparatus 7 transmits, to the non-contact power supply device 5, information on an instruction to start power supply from the non-contact power supply device 5 to the non-contact power receiving device 3 (step S205). The non-contact power supply device 5 receives the information on the instruction to start power supply from the non-contact power supply device 5 to the non-contact power receiving device 3 (step S206). Then, the non-contact power supply device 5 performs power supply processing on the non-contact power receiving device 3 (step S207), and the power supply start determination processing ends.

On the other hand, when it is not determined in step S203 that the distance between the mobile wireless device 1 and the fixed wireless device 6 satisfies the predetermined condition (No in step S203), steps S204 to S207 are not performed, and the power supply start determination processing ends.

In addition, when it is not determined in step S204 to start power supply from the non-contact power supply device 5 to the non-contact power receiving device 3 (Yes in step S204), steps S205 to S207 are not performed, and the power supply start determination processing ends.

The information on the distance between the mobile wireless device 1 and the fixed wireless device 6 transmitted in step S201 may include information on the distance between the mobile wireless device 1 and the fixed wireless device 6, the time at which the distance is calculated, and the like.

Note that the information processing apparatus 7 may guide the mobile object 4 so that the distance between the mobile wireless device 1 and the fixed wireless device 6 satisfies the predetermined condition on the basis of the information on the distance between the mobile wireless device 1 and the fixed wireless device 6 received in step S202.

For example, the information processing apparatus 7 may transmit the information on the distance between the mobile wireless device 1 and the fixed wireless device 6 to the control apparatus 2, and the information on the distance between the mobile wireless device 1 and the fixed wireless device 6 may be displayed on the display screen of the control apparatus 2, so that a user who operates the mobile object 4 can easily move the mobile object 4 to a position close to the non-contact power supply device 5.

Alternatively, for example, the information processing apparatus 7 may transmit the information on the distance between the mobile wireless device 1 and the fixed wireless device 6 to the control apparatus 2, and the voice output unit of the control apparatus 2 may output a voice regarding the distance between the mobile wireless device 1 and the fixed wireless device 6, so that the user who operates the mobile object 4 can easily move the mobile object 4 to a position close to the non-contact power supply device 5. In addition, the guidance by voice may be executed together with the guidance by display on the display screen.

Alternatively, for example, in a case where the movement of the mobile object 4 is automatically controlled by the control apparatus 2, the information processing apparatus 7 may transmit the information on the distance between the mobile wireless device 1 and the fixed wireless device 6 to the control apparatus 2, and the control apparatus 2 may be caused to control the movement of the mobile object 4 so that the distance between the mobile wireless device 1 and the fixed wireless device 6 satisfies the predetermined condition.

The predetermined condition in step S203 is not particularly limited, and can be appropriately designed. For example, the predetermined condition may be that the distance between the mobile wireless device 1 and the fixed wireless device 6 is equal to or less than a predetermined length, that the distance between the mobile wireless device 1 and the fixed wireless device 6 is less than the predetermined length, or the like.

The predetermined length may be specified on the basis of the positional relationship between the mobile wireless device 1 and the non-contact power receiving device 3 provided in the mobile object 4, the position where the mobile wireless device 1 is provided in the mobile object 4, the position where the non-contact power receiving device 3 is provided in the mobile object 4, the positional relationship between the fixed wireless device 6 and the non-contact power supply device 5 provided in the power supply spot 8, the position where the fixed wireless device 6 is provided in the power supply spot 8, the position where the non-contact power supply device 5 is provided in the power supply spot 8, and/or the range in which the non-contact power supply device 5 can supply power with predetermined power supply efficiency. In this case, the information on the positional relationship between the mobile wireless device 1 and the non-contact power receiving device 3 provided in the mobile object 4, the information on the position where the mobile wireless device 1 is provided in the mobile object 4, and/or the information on the position where the non-contact power receiving device 3 is provided in the mobile object 4 may be transmitted from the control apparatus 2 to the information processing apparatus 7.

The information processing apparatus 7 can specify a distance between the non-contact power receiving device 3 and the non-contact power supply device 5 and/or a positional relationship between the non-contact power receiving device 3 and the non-contact power supply device 5 on the basis of the information on the positional relationship between the mobile wireless device 1 and the non-contact power receiving device 3 provided in the mobile object 4, the position where the mobile wireless device 1 is provided in the mobile object 4, the position where the non-contact power receiving device 3 is provided in the mobile object 4, the positional relationship between the fixed wireless device 6 and the non-contact power supply device 5 provided in the power supply spot 8, the position where the fixed wireless device 6 is provided in the power supply spot 8, and/or the position where the non-contact power supply device 5 is provided in the power supply spot 8, and the distance between the mobile wireless device 1 and the fixed wireless device 6. By specifying the distance between the non-contact power receiving device 3 and the non-contact power supply device 5 and/or the positional relationship between the non-contact power receiving device 3 and the non-contact power supply device 5 from the distance between the mobile wireless device 1 and the fixed wireless device 6, it is possible to perform non-contact power supply more efficiently.

For example, suppose that the mobile object 4 is an electric vehicle, the mobile wireless device 1 is provided in the vicinity of the non-contact power receiving device 3, the mobile wireless device 1 and the non-contact power receiving device 3 are provided around a lower surface of a vehicle body of the electric vehicle, the non-contact power supply device 5 is of a non-radiation type non-contact power supply system, and the fixed wireless device 6 and the non-contact power supply device 5 are provided in the ground near the surface of the ground in the power supply spot 8. In this case, the distance between the mobile wireless device 1 and the fixed wireless device 6 can be specified to be substantially equal to the distance between the non-contact power receiving device 3 and the non-contact power supply device 5. In this case, it is considered that efficient non-contact power supply can be performed when the distance between the mobile wireless device 1 and the fixed wireless device 6 is equal to or less than the vehicle height of the electric vehicle. Therefore, the predetermined condition may be that the distance between the mobile wireless device 1 and the fixed wireless device 6 is equal to or less than the vehicle height of the electric vehicle.

The method of determining whether or not to start power supply from the non-contact power supply device 5 to the non-contact power receiving device 3 in step S204 is not particularly limited, and can be appropriately designed.

For example, whether or not to start power supply may be determined on the basis of a power supply instruction from the user of the mobile object 4. Specifically, for example, it may be determined to start power supply in a case where there is an instruction to start power supply from the user. In this case, information on the power supply instruction from the user may be input to the control apparatus 2 and transmitted from the control apparatus 2 to the information processing apparatus 7. In addition, the information on the power supply instruction from the user may include information such as the instruction to start power supply, the amount of power to be supplied, the length of time to supply power, and the type of power supply. Note that the type of power supply can include types such as normal power supply and rapid power supply.

Note that the "user of the mobile object 4" may be a person who operates the mobile object 4, a person who rides on the mobile object 4, or an owner of the mobile object 4.

In addition, for example, whether or not to start power supply may be determined on the basis of the charging state of the mobile object 4. Specifically, for example, it may be determined to start power supply in a case where the mobile object 4 is not fully charged, or it may be determined to start power supply in a case where the charging state of the mobile object 4 is a predetermined state. In this case, information on the charging state of the mobile object 4 may be stored in the storage unit 23 of the control apparatus 2 and transmitted from the control apparatus 2 to the information processing apparatus 7.

Alternatively, in a case where it is determined in step S203 that the distance between the mobile wireless device 1 and the fixed wireless device 6 satisfies the predetermined condition, it may be automatically determined to start power supply.

In addition, while power is being supplied to the mobile object 4 by power supply processing described below, it may be determined in step S204 not to start power supply.

The information on the instruction to start power supply in steps S205 and S206 may include information such as the instruction to start power supply, the amount of power to be supplied, the length of time to supply power, and the type of power supply. The information on the instruction to start power supply may be transmitted from the control apparatus 2 to the information processing apparatus 7.

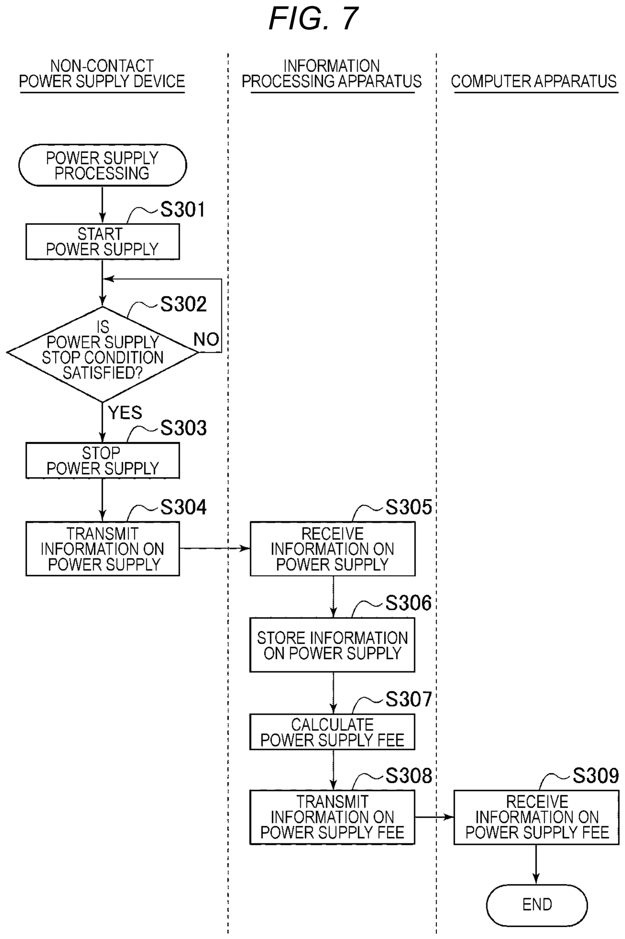

The power supply processing in step S207 will be described with reference to a flowchart illustrated in Fig. 7. Fig. 7 is a diagram illustrating a flowchart of the power supply processing according to the embodiment of the present invention.

When receiving the information on the instruction to start power supply from the non-contact power supply device 5 to the non-contact power receiving device 3 in step S206 of the power supply start determination processing, the non-contact power supply device 5 starts power supply to the non-contact power receiving device 3 (step S301). Next, the non-contact power supply device 5 determines whether or not a condition for stopping power supply (hereinafter, also referred to as a power supply stop condition) from the non-contact power supply device 5 to the non-contact power receiving device 3 is satisfied (step S302). When determining that the power supply stop condition is satisfied (Yes in step S302), the non-contact power supply device 5 stops the power supply to the non-contact power receiving device 3 (step S303). On the other hand, when not determining that the power supply stop condition is satisfied (No in step S302), the non-contact power supply device 5 does not stop the power supply to the non-contact power receiving device 3, and the power supply is continued. That is, the power supply from the non-contact power supply device 5 to the non-contact power receiving device 3 is continued until it is determined that the power supply stop condition is satisfied.

The power supply stop condition in step S302 is not particularly limited, and can be appropriately designed. For example, the power supply stop condition may be that the amount of power supplied from the non-contact power supply device 5 to the mobile object 4 (hereinafter, also referred to as a power supply amount) reaches a predetermined amount. The predetermined amount may be an amount designated by the user, may be an amount until the mobile object 4 becomes fully charged, or may be an amount until the charging state of the mobile object 4 becomes a predetermined state.

Alternatively, for example, the power supply stop condition may be that a time (hereinafter, also referred to as a power supply time) during which the non-contact power supply device 5 supplies power to the mobile object 4 reaches a predetermined length. The predetermined time may be a time designated by the user, may be a time until the mobile object 4 becomes fully charged, or may be a time until the charging state of the mobile object 4 becomes a predetermined state.

Alternatively, for example, the power supply stop condition may be that an instruction to stop the power supply is given from the user, the distance between the mobile wireless device 1 and the fixed wireless device 6 does not satisfy the predetermined condition due to the movement of the mobile object 4, or the like.

In addition, the information processing apparatus 7 may determine whether the power supply stop condition is satisfied. In this case, when determining that the power supply stop condition is satisfied, the information processing apparatus 7 may transmit information indicating that the power supply stop condition is satisfied or information for stopping the power supply to the non-contact power supply device 5.

As described above, the fixed wireless device is provided in the vicinity of the non-contact power supply device, and the system includes a first power supply starter configured to start power supply from the non-contact power supply device to the mobile object in a case where the calculated distance between the mobile wireless device and the fixed wireless device satisfies a first predetermined condition. As a result, power supply to the mobile object can be started according to the distance between the mobile wireless device and the fixed wireless device.

In addition, as described above, the system includes a power supply stopper configured to stop power supply from the non-contact power supply device to the mobile object in a case where an amount of power supplied from the non-contact power supply device to the mobile object reaches a predetermined amount or in a case where a time during which the non-contact power supply device supplies power to the mobile object reaches a predetermined length. As a result, convenience for the user is improved.

When the power supply from the non-contact power supply device 5 to the non-contact power receiving device 3 is stopped in step S303, the non-contact power supply device 5 transmits information on the power supply to the information processing apparatus 7 (step S304). The information processing apparatus 7 receives the transmitted information on the power supply (step S305). The information processing apparatus 7 stores the received information on the power supply (step S306). The information processing apparatus 7 calculates a power supply fee on the basis of the information on the power supply (step S307). The information processing apparatus 7 transmits information on the calculated power supply fee to another computer apparatus (step S308). The other computer apparatus receives the transmitted information on the power supply fee (step S309), and the power supply processing ends.

The information on the power supply transmitted in step S304 can include information on the amount of power supplied from the non-contact power supply device 5 to the mobile object 4, information on the length of time during which the non-contact power supply device 5 supplies power to the mobile object 4, information on the time at which the non-contact power supply device 5 supplies power to the mobile object 4, information on the type of power supply from the non-contact power supply device 5 to the mobile object 4, and the like.

In step S306, identification information for identifying the mobile object 4 that has received power supply from the non-contact power supply device 5 and/or identification information for identifying the user of the mobile object 4 may be stored in association with the received information on the power supply. In this case, the identification information may be stored in the storage unit 23 of the control apparatus 2 and transmitted from the control apparatus 2 to the information processing apparatus 7.

In addition, in step S307, the power supply fee may be calculated on the basis of the identification information for identifying the mobile object 4 that has received power supply from the non-contact power supply device 5 or the identification information for identifying the user of the mobile object 4, the information on the amount of power supplied from the non-contact power supply device 5 to the mobile object 4, and/or the information on the length of time during which the non-contact power supply device 5 supplies power to the mobile object 4. Furthermore, the power supply fee may be calculated on the basis of the information on the time at which the non-contact power supply device 5 supplies power to the mobile object 4 and/or the information on the type of power supply from the non-contact power supply device 5 to the mobile object 4.

In step S308, the identification information for identifying the mobile object 4 that has received power supply from the non-contact power supply device 5 or the identification information for identifying the user of the mobile object 4 may be transmitted to the other computer apparatus together with the information on the calculated power supply fee. The other computer apparatus may be operated by a charging party who charges the user for the power supply fee. Examples of the other computer apparatus include a desktop/notebook personal computer, a tablet terminal, a smartphone, a conventional mobile phone, and the like.

In addition, the information on the calculated power supply fee may be transmitted to the control apparatus 2 or a user terminal operated by the user.

In the above description, an aspect has been described in which the power supply fee is calculated by the information processing apparatus 7, but the power supply fee may be calculated by the other computer apparatus. In this case, the information processing apparatus 7 may transmit, to the other computer apparatus, the identification information for identifying the mobile object 4 that has received power supply from the non-contact power supply device 5 or the identification information for identifying the user of the mobile object 4, the information on the amount of power supplied from the non-contact power supply device 5 to the mobile object 4, the information on the length of time during which the non-contact power supply device 5 supplies power to the mobile object 4, the information on the time at which the non-contact power supply device 5 supplies power to the mobile object 4, and/or the information on the type of power supply from the non-contact power supply device 5 to the mobile object 4. Then, the other computer apparatus may calculate the power supply fee on the basis of the transmitted information.

As described above, the system includes a power supply information storage configured to store identification information for identifying the mobile object receiving power supply from the non-contact power supply device or identification information for identifying a user of the mobile object, information on an amount of power supplied from the non-contact power supply device to the mobile object, and/or information on a length of time during which the non-contact power supply device supplies power to the mobile object. As a result, the information on the power supply can be easily managed.

As described above, the system includes: a power supply fee calculator configured to calculate a power supply fee on the basis of identification information for identifying the mobile object receiving power supply from the non-contact power supply device or identification information for identifying a user of the mobile object, information on an amount of power supplied from the non-contact power supply device to the mobile object, and/or information on a length of time during which the non-contact power supply device supplies power to the mobile object; and a power supply fee transmitter configured to transmit the identification information for identifying the mobile object or the identification information for identifying the user who wants power supply to the mobile object and information on the calculated power supply fee to another computer apparatus. As a result, it is easy to charge the user for the power supply fee.

[Second Embodiment]

Next, a second embodiment of the present invention will be described. In the second embodiment of the present invention, a non-contact power supply device 5 supplies power to a mobile object 4 on the basis of the position of a mobile wireless device 1 specified by the mobile wireless device 1 provided in the mobile object 4 and at least three fixed wireless devices 7 provided around the non-contact power supply device 5.

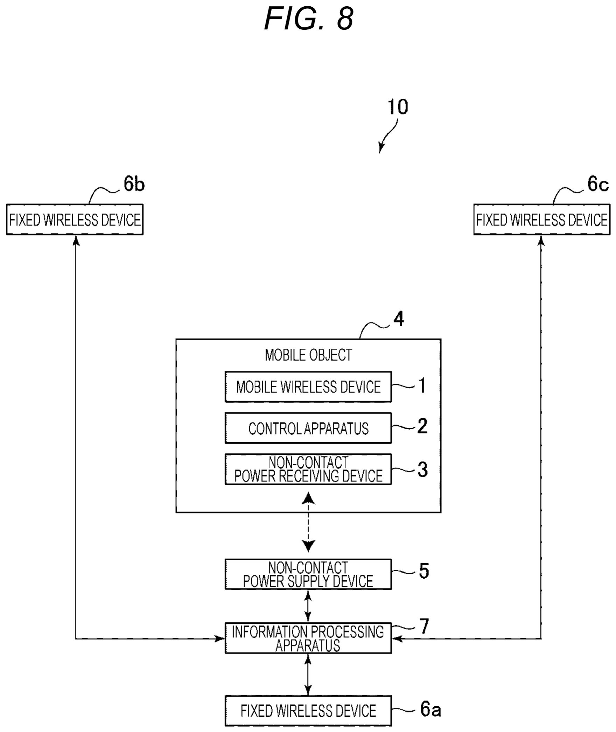

Fig. 8 is a block diagram illustrating a configuration of a system according to the embodiment of the present invention. In the second embodiment of the present invention, a system 10 includes a mobile object 4 including a mobile wireless device 1, a control apparatus 2, and a non-contact power receiving device 3, a non-contact power supply device 5, three fixed wireless devices 6 (6a, 6b, and 6c), and an information processing apparatus 7. The number of fixed wireless devices 6 may be at least 3, or may be 5 or 9.

The control apparatus 2 is communicably connected to the non-contact power receiving device 3 and the mobile wireless device 1 in a wired or wireless manner. The information processing apparatus 7 is communicably connected to the non-contact power supply device 5 and the fixed wireless devices 6 in a wired or wireless manner. In addition, the control apparatus 2 and the information processing apparatus 7 are communicably connected to each other in a wired or wireless manner. Furthermore, the mobile wireless device 1 and the fixed wireless devices 6 can be connected to each other by wireless communication. In addition, the fixed wireless devices 6 can be connected to each other by wireless communication.

The mobile object 4 is not particularly limited as long as the mobile object includes the non-contact power receiving device 3 capable of receiving power supplied in a non-contact manner. Examples of the mobile object 4 include a vehicle such as an electric vehicle and a flying object such as a drone.

A place where the non-contact power supply device 5 is provided is not particularly limited. The non-contact power supply device 5 may be installed in a parking lot of a commercial facility, a public facility, an accommodation facility, a rest facility, or the like. The non-contact power supply device 5 may also be installed outdoors or indoors.

A method of non-contact power supply may be a non-radiation type or a radiation type. Examples of the non-radiation type non-contact power supply method include an electromagnetic induction method, a magnetic field resonance method, and an electric field coupling method. In addition, examples of the radiation-type non-contact power supply method include a microwave method and a laser method.

As for the non-contact power supply device 5 and the non-contact power receiving device 3, the description in the first embodiment can be adopted within a necessary range.

In the second embodiment, the expressions that "the non-contact power supply device 5 performs non-contact power supply to the mobile object 4" and "the non-contact power supply device 5 performs non-contact power supply to the non-contact power receiving device 3" both mean "the non-contact power supply device 5 performs non-contact power supply to the non-contact power receiving device 3 provided in the mobile object 4". In addition, the power supplied from the non-contact power supply device 5 to the mobile object 4 is charged into a driving battery provided in the mobile object 4.

As for the mobile wireless device 1, the description in the first embodiment can be adopted within a necessary range.

In addition, the fixed wireless devices 6 only need to be provided around the non-contact power supply device 5 so as to enable communication connection with the mobile wireless device 1. As for other configurations of the fixed wireless devices 6, the description in the first embodiment can be adopted within a necessary range.

As for the control apparatus 2, the description in the first embodiment can be adopted within a necessary range.

The information processing apparatus 7 is not particularly limited as long as it is connected to the control apparatus 2, the non-contact power supply device 5, and the fixed wireless devices 6 by communication and can perform information processing. The information processing apparatus 7 may be provided in the vicinity of the non-contact power supply device 5, or may not be provided in the vicinity of the non-contact power supply device 5. The information processing apparatus 7 may be, for example, a server apparatus or the like. In addition, the information processing apparatus 7 may function in a distributed manner in a plurality of computer apparatuses. For example, instead of the information processing apparatus 7, a distributed ledger technology such as a blockchain may be used.

As for other configurations of the information processing apparatus 7, the description in the first embodiment can be adopted within a necessary range.

Hereinafter, an aspect will be described in which the system according to the second embodiment of the present invention guides the mobile object 4 to the non-contact power supply device 5 and the non-contact power supply device 5 supplies power to the non-contact power receiving device 3 provided in the mobile object 4.

In the second embodiment of the present invention, in the mobile object 4, the mobile wireless device 1 may be provided in the vicinity of the non-contact power receiving device 3 provided in the mobile object 4, or may not be provided in the vicinity of the non-contact power receiving device 3 provided in the mobile object 4.

"The mobile wireless device 1 is provided in the vicinity of the non-contact power receiving device 3" means that the mobile wireless device 1 is provided within a predetermined range from the non-contact power receiving device 3. The predetermined range is not particularly limited, and can be appropriately designed. For example, the range may have a radius of 1 cm, a radius of 5 cm, a radius of 15 cm, a radius of 30 cm, or a radius of 50 cm.

In a case where the mobile wireless device 1 is provided in the vicinity of the non-contact power receiving device 3, the mobile wireless device 1 may be formed integrally with the non-contact power receiving device 3, or may be formed separately from the non-contact power receiving device 3. Both the mobile wireless device 1 and the non-contact power receiving device 3 may be provided within a range in which non-contact power supply from the non-contact power supply device 5 can be received with substantially equal power supply efficiency. That is, the mobile wireless device 1 and the non-contact power receiving device 3 may be provided within a range in which the power supply efficiency is substantially equal between a case where the non-contact power supply device 5 performs non-contact power supply to a position where the mobile wireless device 1 is provided and a case where the non-contact power supply device 5 actually performs non-contact power supply to the non-contact power receiving device 3.

In addition, in a case where the mobile wireless device 1 is not provided in the vicinity of the non-contact power receiving device 3, the mobile wireless device 1 and the non-contact power receiving device 3 do not have to be provided within the range in which non-contact power supply from the non-contact power supply device 5 can be received with substantially equal power supply efficiency. That is, the mobile wireless device 1 and the non-contact power receiving device 3 do not have to be provided within the range in which the power supply efficiency is substantially equal between a case where the non-contact power supply device 5 performs non-contact power supply to a position where the mobile wireless device 1 is provided and a case where the non-contact power supply device 5 actually performs non-contact power supply to the non-contact power receiving device 3.

Information on a positional relationship between the mobile wireless device 1 and the non-contact power receiving device 3 provided in the mobile object 4, information on a position where the mobile wireless device 1 is provided in the mobile object 4, and/or information on a position where the non-contact power receiving device 3 is provided in the mobile object 4 may be stored in the storage unit 23 of the control apparatus 2 provided in the mobile object 4. In addition, the information on a position where the mobile wireless device 1 is provided in the mobile object 4 and/or the information on a position where the non-contact power receiving device 3 is provided in the mobile object 4 may include information on the size and shape of the mobile object 4.

Note that the "position of the non-contact power receiving device 3" may be the position of a place where the non-contact power receiving device 3 actually receives power supplied in a non-contact manner.

In addition, in the second embodiment of the present invention, the at least three fixed wireless devices 6 are provided around the non-contact power supply device 5.

"The fixed wireless devices 6 are provided around the non-contact power supply device 5" means that the fixed wireless devices 6 are provided within a predetermined range from the non-contact power supply device 5. The predetermined range is not particularly limited, and can be appropriately designed. For example, the range may have a radius of 2 m, a radius of 5 m, a radius of 10 m, a radius of 15 m, or a radius of 20 m.

The at least three fixed wireless devices 6 provided around the non-contact power supply device 5 may be provided at positions of substantially the same distance from the non-contact power supply device 5, or may be provided at different distances from the non-contact power supply device 5.

For example, the at least three fixed wireless devices 6 may be provided so as to surround the non-contact power supply device 5 from the upper side, the left side, and the right side. The at least three fixed wireless devices 6 may be provided at positions away from each other.

Alternatively, for example, the at least three fixed wireless devices 6 may be provided at the same position in a height direction and different positions in a horizontal direction. In this case, the positions in the horizontal direction may or may not be positions corresponding to the vertices of an equilateral triangle.

In addition, any one of the at least three fixed wireless devices 6 may be provided in the vicinity of the non-contact power supply device 5.

The fixed wireless device 6 provided in the vicinity of the non-contact power supply device 5 may be formed integrally with the non-contact power supply device 5, or may be formed separately from the non-contact power supply device 5. In addition, in this case, the fixed wireless device 6 and the non-contact power supply device 5 may be provided within a range in which the power supply efficiency is substantially equal between a case where non-contact power supply is performed on the non-contact power receiving device 3 from a position where the fixed wireless device 6 is provided and a case where non-contact power supply is performed on the non-contact power receiving device 3 from a position where the non-contact power supply device 5 is actually provided.

Information on a positional relationship between each fixed wireless device 6 and the non-contact power supply device 5, information on a position where each fixed wireless device 6 is provided, information on a position where the non-contact power supply device 5 is provided, and/or information on a range in which the non-contact power supply device 5 can supply power with predetermined power supply efficiency may be stored in the storage unit 73 of the information processing apparatus 7.

Note that information for identifying the fixed wireless device 6 may be attached to each fixed wireless device 6. The information on the positional relationship between each fixed wireless device 6 and the non-contact power supply device 5 and the information on the position where each fixed wireless device 6 is provided may be stored in the storage unit 73 of the information processing apparatus 7 in association with the information for identifying the fixed wireless device 6.

Note that the "position of the non-contact power supply device 5" may be the position of a place where the non-contact power supply device 5 actually performs non-contact power supply.

In the second embodiment of the present invention, the method of non-contact power supply may be the radiation type. In addition, the non-contact power supply device 5 may be provided on the ground.

Each fixed wireless device 6 provided around the non-contact power supply device 5 transmits a signal to the surroundings at predetermined intervals so as to enable mutual transmission and reception of the signal when the mobile wireless device 1 approaches the fixed wireless device 6. The predetermined interval is not particularly limited, and can be appropriately designed. For example, the fixed wireless device 6 may transmit a signal at intervals of 30 seconds, at intervals of 1 minute, at intervals of 5 minutes, or at intervals of 10 minutes. The predetermined interval may be an interval that does not interfere with the guidance of the mobile object 4.

In a case where the mobile object 4 moves toward the non-contact power supply device 5 and enters a range reached by the signal transmitted from the fixed wireless device 6, the mobile wireless device 1 provided in the mobile object 4 receives the signal transmitted from the fixed wireless device 6. Then, the fixed wireless device 6 calculates a distance between the mobile wireless device 1 and the fixed wireless device 6.

As for the method of calculating the distance between the mobile wireless device 1 and the fixed wireless device 6, the description of the distance calculation processing in the first embodiment can be adopted within a necessary range.

In the second embodiment, since the plurality of fixed wireless devices 6 are provided, the correction of the phase deviation and/or the correction of the time deviation may be performed between the respective fixed wireless devices 6. The frequency of the correction of the phase deviation and/or the correction of the time deviation performed between the fixed wireless devices 6 is not particularly limited, and can be appropriately designed. For example, the frequency of the correction of the phase deviation and/or the correction of the time deviation may be once every 30 minutes, once every 1 hour, once every 6 hours, or once a day.

Information on the calculated distances between the mobile wireless device 1 and the fixed wireless devices 6 is transmitted to the information processing apparatus 7 in power supply start determination processing described below. Then, the information processing apparatus 7 specifies the position of the mobile wireless device 1 and determines whether or not to start power supply from the non-contact power supply device 5 to the mobile object 4 on the basis of the distances between the mobile wireless device 1 and the fixed wireless devices 6.

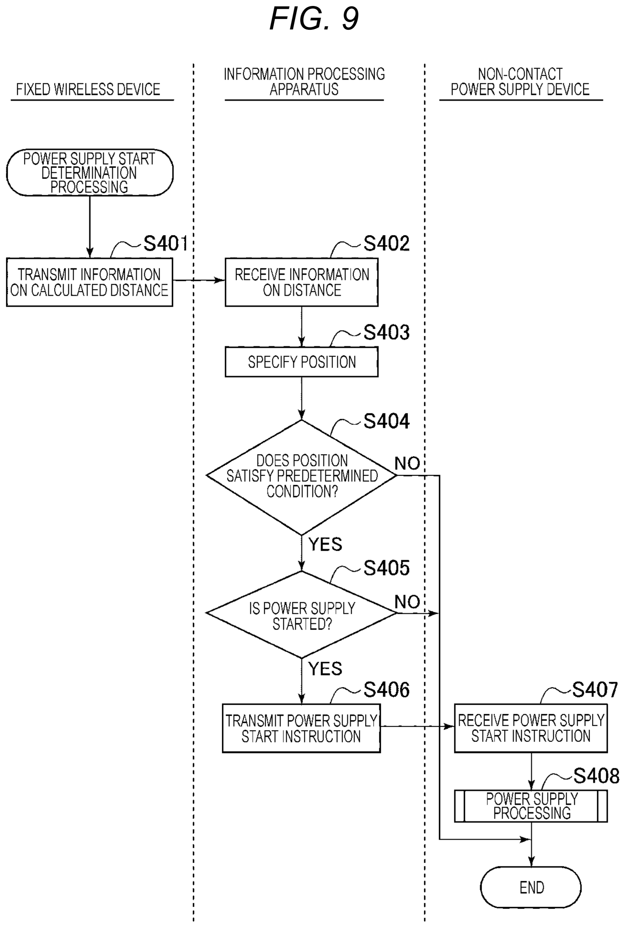

Fig. 9 is a diagram illustrating a flowchart of the power supply start determination processing according to the embodiment of the present invention.

The fixed wireless device 6 transmits the information on the distance between the mobile wireless device 1 and the fixed wireless device 6 calculated in the fixed wireless device 6 to the information processing apparatus 7 (step S401). The information processing apparatus 7 receives the transmitted information on the distance between the mobile wireless device 1 and the fixed wireless device 6 (step S402). The information processing apparatus 7 specifies the position of the mobile wireless device 1 based on the received information (step S403).

The position of the mobile wireless device 1 is specified in step S403, then the information processing apparatus 7 determines whether or not the position of the mobile wireless device 1 satisfies a predetermined condition (step S404). When determining that the position of the mobile wireless device 1 satisfies the predetermined condition (Yes in step S404), the information processing apparatus 7 determines whether or not to start power supply from the non-contact power supply device 5 to the non-contact power receiving device 3 (step S405). When determining to start power supply from the non-contact power supply device 5 to the non-contact power receiving device 3 (Yes in step S405), the information processing apparatus 7 transmits, to the non-contact power supply device 5, information on an instruction to start power supply from the non-contact power supply device 5 to the non-contact power receiving device 3 (step S406). The non-contact power supply device 5 receives the information on the instruction to start power supply from the non-contact power supply device 5 to the non-contact power receiving device 3 (step S407). Then, the non-contact power supply device 5 performs power supply processing on the non-contact power receiving device 3 (step S408), and the power supply start determination processing ends.

On the other hand, when it is not determined in step S404 that the position of the mobile wireless device 1 satisfies the predetermined condition (No in step S404), steps S405 to S408 are not performed, and the power supply start determination processing ends.

In addition, when it is not determined in step S405 to start power supply from the non-contact power supply device 5 to the non-contact power receiving device 3 (Yes in step S405), steps S406 to S408 are not performed, and the power supply start determination processing ends.

Fig. 9 illustrates the processing of transmitting the information on the distance from one fixed wireless device 6 to the information processing apparatus 7. However, the at least three fixed wireless devices 6 provided around the non-contact power supply device 5 each calculate the distance between the mobile wireless device 1 and the fixed wireless device 6, and transmit the information on the distance between the mobile wireless device 1 and the fixed wireless device 6 to the information processing apparatus 7.

The information on the distance between the mobile wireless device 1 and the fixed wireless device 6 transmitted in step S401 may include information on the distance between the mobile wireless device 1 and the fixed wireless device 6, the time at which the distance is calculated, and the like. The information on the distance between the mobile wireless device 1 and the fixed wireless device 6 may also include identification information for identifying the fixed wireless device 6.

In step S403, the position of the mobile wireless device 1 is specified on the basis of the distances between the at least three fixed wireless devices 6 and the mobile wireless device 1. In a case where four or more fixed wireless devices 6 are provided, the position of the mobile wireless device 1 may be specified on the basis of the distances between the four or more fixed wireless devices 6 and the mobile wireless device 1. In a case where the four or more fixed wireless devices 6 are provided, it is preferable that the fixed wireless devices 6 are provided so as not to be present on the same plane.

The method of specifying the position of the mobile wireless device 1 is not particularly limited, and can be appropriately designed. For example, the position of the mobile wireless device 1 may be specified by a three-point positioning method. Specifically, for example, a circle centered on the position of the fixed wireless device 6 and having the distance between the mobile wireless device 1 and the fixed wireless device 6 as a radius may be obtained for each of the three fixed wireless devices 6, and an intersection point of the three circles may be specified as the position of the mobile wireless device 1.

Note that the position of the mobile wireless device 1 may not be specified by the information processing apparatus 7. For example, the information on the distances between the mobile wireless device 1 and the fixed wireless devices 6 may be transmitted to any one of the at least three fixed wireless devices 6, and the fixed wireless device 6 to which the information on the distances has been transmitted may specify the position of the mobile wireless device 1. In this case, the information on the specified position of the mobile wireless device 1 may be transmitted to the information processing apparatus 7.

In addition, the information processing apparatus 7 may guide the mobile object 4 so that the position of the mobile wireless device 1 satisfies the predetermined condition on the basis of the information on the position of the mobile wireless device 1 specified in step S403. As for the aspect in which the information processing apparatus 7 guides the mobile object 4, the description in the first embodiment can be adopted within a necessary range.

The predetermined condition in step S404 is not particularly limited, and can be appropriately designed. For example, the predetermined condition may be that the position of the mobile wireless device 1 is within a predetermined range from the position where the non-contact power supply device 5 is provided.

The predetermined range may be specified on the basis of the positional relationship between the mobile wireless device 1 and the non-contact power receiving device 3 provided in the mobile object 4, the position where the mobile wireless device 1 is provided in the mobile object 4, the position where the non-contact power receiving device 3 is provided in the mobile object 4, the position where the non-contact power supply device 5 is provided, and/or the range in which the non-contact power supply device 5 can supply power with predetermined power supply efficiency. In this case, the information on the positional relationship between the mobile wireless device 1 and the non-contact power receiving device 3 provided in the mobile object 4, the information on the position where the mobile wireless device 1 is provided in the mobile object 4, and/or the information on the position where the non-contact power receiving device 3 is provided in the mobile object 4 may be transmitted from the control apparatus 2 to the information processing apparatus 7.

The information processing apparatus 7 can specify the position of the non-contact power receiving device 3 and/or a positional relationship between the non-contact power receiving device 3 and the non-contact power supply device 5 on the basis of the positional relationship between the mobile wireless device 1 and the non-contact power receiving device 3 provided in the mobile object 4, the position where the mobile wireless device 1 is provided in the mobile object 4, the position where the non-contact power receiving device 3 is provided in the mobile object 4, and/or the position where the non-contact power supply device 5 is provided. By specifying the position of the non-contact power receiving device 3 and/or the positional relationship between the non-contact power receiving device 3 and the non-contact power supply device 5 from the position of the mobile wireless device 1, it is possible to perform non-contact power supply more efficiently.

For example, in a case where the mobile object 4 is a drone, the mobile wireless device 1 is provided in the vicinity of the non-contact power receiving device 3, and the non-contact power supply device 5 is of a radiation type non-contact power supply system, the position of the mobile wireless device 1 can be specified to be substantially equal to the position of the non-contact power receiving device 3. In this case, it is considered that efficient non-contact power supply can be performed when the position of the mobile wireless device 1 is within the range in which the non-contact power supply device 5 can supply power with predetermined power supply efficiency. Therefore, the predetermined condition may be that the position of the mobile wireless device 1 is within the range in which the non-contact power supply device 5 can supply power with predetermined power supply efficiency.

As for the method of determining whether or not to start power supply from the non-contact power supply device 5 to the non-contact power receiving device 3 in step S405, the description in the first embodiment can be adopted within a necessary range.

As for the information on the instruction to start power supply in steps S406 and S407, the description of the power supply processing in the first embodiment can be adopted within a necessary range.

As for the power supply processing in step S408, the description of the power supply processing in the first embodiment can be adopted within a necessary range.

As described above, at least three of the fixed wireless devices are provided around the non-contact power supply device, and the system includes: a position specifier configured to specify a position of the mobile wireless device on the basis of the calculated distance between the mobile wireless device and the fixed wireless device; and a second power supply starter configured to start power supply from the non-contact power supply device to the mobile object in a case where the specified position of the mobile wireless device satisfies a second predetermined condition. As a result, power supply to the mobile object can be started in a case where the position of the mobile object satisfies the predetermined condition.

As described above, in the first embodiment, an example in which the fixed wireless device is provided in the vicinity of the non-contact power supply device has been described, and in the second embodiment, an example in which the at least three fixed wireless devices are provided around the non-contact power supply device has been described. However, the fixed wireless device only needs to be fixed at a predetermined position. That is, the system of the present invention only needs to include the mobile wireless device provided in the mobile object and the fixed wireless device fixed at a predetermined position. In the system of the present invention, the number of fixed wireless devices and the position at which the fixed wireless device is provided are not particularly limited.

As described above, the system includes a distance calculator configured to calculate a distance between the mobile wireless device and the fixed wireless device, wherein the distance calculator calculates the distance on the basis of a propagation time of communication between the mobile wireless device and the fixed wireless device, and calculates the distance on the basis of a time deviation between the internal clock provided in the mobile wireless device and the internal clock provided in the fixed wireless device. As a result, the system for controlling the position of the mobile object can be provided.

Since the system of the present invention is constituted by the mobile wireless device provided in the mobile object and the fixed wireless device fixed at a predetermined position, the system can also be used indoors where a positioning system using a satellite cannot be used.

Furthermore, in the above description, an example has been described in which the mobile wireless device and the fixed wireless device are used in calculating the distance and/or specifying the position. However, an apparatus other than the mobile wireless device and the fixed wireless device may be used in calculating the distance and/or specifying the position. For example, a positioning system such as GPS, a camera, a laser, or the like may be used together with the mobile wireless device and the fixed wireless device.

Reference Signs List

| | |
|---|---|
| 1 | Mobile wireless device |
| 2 | Control apparatus |
| 3 | Non-contact power receiving device |
| 4 | Mobile object |
| 5 | Non-contact power supply device |
| 6 | Fixed wireless device |
| 7 | Information processing apparatus |
| 8 | Power supply spot |
| 10 | System |
| 11 | Control unit |
| 12 | RF chip |
| 13 | Oscillator |
| 14 | Clock |
| 15 | Phase detector |
| 21 | Control unit |
| 22 | RAM |
| 23 | Storage unit |
| 24 | Input unit |
| 25 | Display unit |
| 26 | Communication interface |
| 71 | Control unit |
| 72 | RAM |
| 73 | Storage unit |
| 74 | Communication interface |

**Claims**

1. A system comprising a mobile wireless device provided in a mobile object, and a fixed wireless device fixed at a predetermined position, the system comprising

a distance calculator that calculates a distance between the mobile wireless device and the fixed wireless device, wherein the distance calculator calculates the distance on a basis of a propagation time of communication between the mobile wireless device and the fixed wireless device, and calculates the distance on a basis of a time deviation between an internal clock provided in the mobile wireless device and an internal clock provided in the fixed wireless device.

2. The system according to claim 1, comprising:

a time deviation calculator that calculates the time deviation between the internal clock provided in the mobile wireless device and the internal clock provided in the fixed wireless device by transmitting and receiving a signal between the mobile wireless device and the fixed wireless device; and
a time deviation corrector that corrects a time deviation of the internal clock provided in the mobile wireless device on a basis of the calculated time deviation,
wherein the distance calculator calculates the distance after the time deviation corrector corrects the time deviation.

3. The system according to claim 2, comprising:

a phase deviation calculator that calculates a phase deviation between the internal clock provided in the mobile wireless device and the internal clock provided in the fixed wireless device by transmitting and receiving a signal between the mobile wireless device and the fixed wireless device; and
a phase deviation corrector that corrects a phase deviation of the internal clock provided in the mobile wireless device on a basis of the calculated phase deviation,
wherein the time deviation calculator calculates the time deviation after the phase deviation corrector corrects the phase deviation.

4. The system according to claim 1,

wherein the fixed wireless device is provided in a vicinity of a non-contact power supply device,
the system comprising
a first power supply starter that starts power supply from the non-contact power supply device to the mobile object in a case where the calculated distance between the mobile wireless device and the fixed wireless device satisfies a first predetermined condition.

5. The system according to claim 1,

wherein at least three of the fixed wireless devices are provided around a non-contact power supply device,
the system comprising:

a position specifier that specifies a position of the mobile wireless device on a basis of the calculated distance between the mobile wireless device and the fixed wireless device; and
a second power supply starter that starts power supply from the non-contact power supply device to the mobile object in a case where the specified position of the mobile wireless device satisfies a second predetermined condition.

6. The system according to claim 4 or 5, comprising
a power supply stopper that stops power supply from the non-contact power supply device to the mobile object in a case where an amount of power supplied from the non-contact power supply device to the mobile object reaches a predetermined amount or in a case where a time during which the non-contact power supply device supplies power to the mobile object reaches a predetermined length.

7. The system according to claim 4 or 5, comprising
a power supply information storage that stores identification information for identifying the mobile object receiving power supply from the non-contact power supply device or identification information for identifying a user of the mobile object, information on an amount of power supplied from the non-contact power supply device to the mobile object, and/or information on a length of time during which the non-contact power supply device supplies power to the mobile object.

8. The system according to claim 4 or 5, comprising:

a power supply fee calculator that calculates a power supply fee on a basis of identification information for identifying the mobile object receiving power supply from the non-contact power supply device or identification information for identifying a user of the mobile object, information on an amount of power supplied from the non-contact power supply device to the mobile object, and/or information on a length of time during which the non-contact power supply device supplies power to the mobile object; and
a power supply fee transmitter that transmits the identification information for identifying the mobile object or the identification information for identifying the user of the mobile object and information on the calculated power supply fee to another computer apparatus.

9. The system according to claim 4 or 5,

wherein the non-contact power supply device includes a battery,
the system comprising
a power generation system using natural energy,
wherein the power generation system supplies generated power to the battery.

10. A method comprising

a distance calculation step of calculating a distance between a mobile wireless device provided in a mobile object and a fixed wireless device fixed at a predetermined position,
wherein the distance calculation step calculates the distance on a basis of a propagation time of communication between the mobile wireless device and the fixed wireless device, and calculates the distance on a basis of a time deviation between an internal clock provided in the mobile wireless device and an internal clock provided in the fixed wireless device.

11. A mobile wireless device in a system comprising the mobile wireless device provided in a mobile object, and a fixed wireless device fixed at a predetermined position, the mobile wireless device comprising:

a communication connector that connects with the fixed wireless device by communication; and
a distance calculator that calculates a distance between the mobile wireless device and the fixed wireless device on a basis of a propagation time of communication between the mobile wireless device and the fixed wireless device,
wherein the distance calculator calculates the distance on a basis of a time deviation between an internal clock provided in the mobile wireless device and an internal clock provided in the fixed wireless device.

12. A fixed wireless device in a system comprising a mobile wireless device provided in a mobile object, and the fixed wireless device fixed at a predetermined position, the fixed wireless device comprising:

a communication connector that connects with the mobile wireless device by communication; and
a distance calculator that calculates a distance between the mobile wireless device and the fixed wireless device on a basis of a propagation time of communication between the mobile wireless device and the fixed wireless device,
wherein the distance calculator calculates the distance on a basis of a time deviation between an internal clock provided in the mobile wireless device and an internal clock provided in the fixed wireless device.

13. A mobile object comprising the mobile wireless device according to claim 11.

# FIG. 1

10

4

| MOBILE OBJECT |
|---|
| MOBILE WIRELESS DEVICE ~ 1 |
| CONTROL APPARATUS ~ 2 |
| NON-CONTACT POWER RECEIVING DEVICE ~ 3 |

| POWER SUPPLY SPOT |
|---|
| NON-CONTACT POWER SUPPLY DEVICE ~ 5 |
| FIXED WIRELESS DEVICE ~ 6 |
| INFORMATION PROCESSING APPARATUS ~ 7 |

8

# FIG. 2

## FIG. 3

| 21 CONTROL UNIT | 24 INPUT UNIT |
| 22 RAM | 25 DISPLAY UNIT |
| 23 STORAGE UNIT | 26 COMMUNICATION INTERFACE |

## FIG. 4

| 71 CONTROL UNIT | 73 STORAGE UNIT |
| 72 RAM | 74 COMMUNICATION INTERFACE |

# FIG. 5

| FIXED WIRELESS DEVICE | MOBILE WIRELESS DEVICE |
|---|---|

DISTANCE CALCULATION PROCESSING

S101 TRANSMIT SIGNAL → S102 RECEIVE SIGNAL

S104 RECEIVE SIGNAL ← S103 TRANSMIT SIGNAL

S106 RECEIVE INFORMATION ON PHASE OF MOBILE WIRELESS DEVICE ← S105 TRANSMIT INFORMATION ON PHASE OF MOBILE WIRELESS DEVICE

S107 CALCULATE PHASE DEVIATION

S108 TRANSMIT PHASE DEVIATION CORRECTION INSTRUCTION → S109 RECEIVE PHASE DEVIATION CORRECTION INSTRUCTION

S110 CORRECT PHASE DEVIATION

S112 RECEIVE SIGNAL ← S111 TRANSMIT SIGNAL

S113 TRANSMIT SIGNAL → S114 RECEIVE SIGNAL

S116 RECEIVE INFORMATION ON TIME OF MOBILE WIRELESS DEVICE ← S115 TRANSMIT INFORMATION ON TIME OF MOBILE WIRELESS DEVICE

S117 CALCULATE TIME DEVIATION

S118 TRANSMIT TIME DEVIATION CORRECTION INSTRUCTION → S119 RECEIVE TIME DEVIATION CORRECTION INSTRUCTION

S120 CORRECT TIME DEVIATION

S122 RECEIVE INFORMATION ON TIME OF MOBILE WIRELESS DEVICE ← S121 TRANSMIT INFORMATION ON TIME OF MOBILE WIRELESS DEVICE

S123 CALCULATE PROPAGATION TIME

S124 CALCULATE DISTANCE

END

# FIG. 6

FIXED WIRELESS DEVICE | INFORMATION PROCESSING APPARATUS | NON-CONTACT POWER SUPPLY DEVICE

POWER SUPPLY START DETERMINATION PROCESSING

S201
TRANSMIT INFORMATION ON CALCULATED DISTANCE

S202
RECEIVE INFORMATION ON DISTANCE

S203
DOES POSITION SATISFY PREDETERMINED CONDITION?
NO
YES

S204
IS POWER SUPPLY STARTED?
NO
YES

S205
TRANSMIT POWER SUPPLY START INSTRUCTION

S206
RECEIVE POWER SUPPLY START INSTRUCTION

S207
POWER SUPPLY PROCESSING

END

# FIG. 7

| NON-CONTACT POWER SUPPLY DEVICE | INFORMATION PROCESSING APPARATUS | COMPUTER APPARATUS |
|---|---|---|

POWER SUPPLY PROCESSING

S301 START POWER SUPPLY

S302 IS POWER SUPPLY STOP CONDITION SATISFIED? NO

YES

S303 STOP POWER SUPPLY

S304 TRANSMIT INFORMATION ON POWER SUPPLY

S305 RECEIVE INFORMATION ON POWER SUPPLY

S306 STORE INFORMATION ON POWER SUPPLY

S307 CALCULATE POWER SUPPLY FEE

S308 TRANSMIT INFORMATION ON POWER SUPPLY FEE

S309 RECEIVE INFORMATION ON POWER SUPPLY FEE

END

# FIG. 8

# FIG. 9

| FIXED WIRELESS DEVICE | INFORMATION PROCESSING APPARATUS | NON-CONTACT POWER SUPPLY DEVICE |
|---|---|---|

POWER SUPPLY START DETERMINATION PROCESSING

S401
TRANSMIT INFORMATION ON CALCULATED DISTANCE

S402
RECEIVE INFORMATION ON DISTANCE

S403
SPECIFY POSITION

S404
DOES POSITION SATISFY PREDETERMINED CONDITION?

NO

YES

S405
IS POWER SUPPLY STARTED?

NO

YES

S406
TRANSMIT POWER SUPPLY START INSTRUCTION

S407
RECEIVE POWER SUPPLY START INSTRUCTION

S408
POWER SUPPLY PROCESSING

END

## INTERNATIONAL SEARCH REPORT

| International application No. |
|---|
| **PCT/JP2024/012515** |

**A. CLASSIFICATION OF SUBJECT MATTER**

*G01S 11/08*(2006.01)i; *B60L 5/00*(2006.01)i; *B60L 53/12*(2019.01)i; *B60L 53/51*(2019.01)i; *B60L 53/52*(2019.01)i; *B60L 53/53*(2019.01)i; *B60L 53/65*(2019.01)i; *B60L 53/66*(2019.01)i; *B60M 7/00*(2006.01)i; *G01S 5/14*(2006.01)i; *G01S 13/74*(2006.01)i; *H02J 7/00*(2006.01)i; *H02J 50/80*(2016.01)i; *H02J 50/90*(2016.01)i

FI: G01S11/08; B60L5/00 B; B60L53/12; B60L53/51; B60L53/52; B60L53/53; B60L53/65; B60L53/66; B60M7/00 X; G01S5/14; G01S13/74; H02J7/00 301D; H02J50/80; H02J50/90

According to International Patent Classification (IPC) or to both national classification and IPC

**B. FIELDS SEARCHED**

Minimum documentation searched (classification system followed by classification symbols)

G01S5/00-5/14, 7/00-7/42, 11/00-13/95, 19/00-19/55; B60L5/00; B60L53/12; B60L53/51; B60L53/52; B60L53/53; B60L53/65; B60L53/66; B60M7/00; H02J7/00; H02J50/80; H02J50/90

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2019-23585 A (DAIHEN CORP.) 14 February 2019 (2019-02-14) paragraphs [0026]-[0086], fig. 1-6 | 1-13 |
| Y | JP 2010-19597 A (FUJITSU LIMITED) 28 January 2010 (2010-01-28) paragraph [0002] | 1-13 |
| Y | JP 2017-129458 A (NIPPON TELEGRAPH AND TELEPHONE CORPORATION) 27 July 2017 (2017-07-27) paragraph [0051] | 2-3 |
| Y | JP 2011-96114 A (BROTHER KOGYO KABUSHIKI KAISHA) 12 May 2011 (2011-05-12) paragraphs [0075]-[0084] | 3 |

☑ Further documents are listed in the continuation of Box C.　　☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 April 2024** | **07 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**EP 4 692 846 A1**

## INTERNATIONAL SEARCH REPORT

International application No.

**PCT/JP2024/012515**

### C.    DOCUMENTS CONSIDERED TO BE RELEVANT

| Category* | Citation of document, with indication, where appropriate, of the relevant passages | Relevant to claim No. |
|---|---|---|
| Y | JP 2021-84560 A (PANASONIC INTELLECTUAL PROPERTY MANAGEMENT CO., LTD.) 03 June 2021 (2021-06-03)<br>    paragraphs [0020], [0032], [0062], fig. 1-4 | 4-9 |
| Y | JP 2020-89096 A (NITTO KOGYO CO., LTD.) 04 June 2020 (2020-06-04)<br>    paragraph [0013] | 6-8 |
| Y | JP 2010-178450 A (THE CHUGOKU ELECTRIC POWER CO., INC.) 12 August 2010 (2010-08-12)<br>    paragraphs [0029], [0033], [0036] | 7-8 |
| A | JP 2000-180526 A (FURUNO ELECTRIC COMPANY, LIMITED) 30 June 2000 (2000-06-30)<br>    entire text, all drawings | 1-13 |

**INTERNATIONAL SEARCH REPORT**
Information on patent family members

International application No.

**PCT/JP2024/012515**

| Patent document cited in search report | | | Publication date (day/month/year) | Patent family member(s) | Publication date (day/month/year) |
|---|---|---|---|---|---|
| JP | 2019-23585 | A | 14 February 2019 | (Family: none) | |
| JP | 2010-19597 | A | 28 January 2010 | (Family: none) | |
| JP | 2017-129458 | A | 27 July 2017 | (Family: none) | |
| JP | 2011-96114 | A | 12 May 2011 | (Family: none) | |
| JP | 2021-84560 | A | 03 June 2021 | US 2021/0162986 A1 paragraphs [0026], [0040], [0076], fig. 1-4 DE 102020131160 A1 CN 112849140 A | |
| JP | 2020-89096 | A | 04 June 2020 | (Family: none) | |
| JP | 2010-178450 | A | 12 August 2010 | (Family: none) | |
| JP | 2000-180526 | A | 30 June 2000 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022064583 A